(19) Europäisches Patentamt
European Patent Office
Office européen des brevets

(11) **EP 1 846 757 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **06706558.1**

(22) Anmeldetag: **01.02.2006**

(51) Int Cl.:
**G01N 30/86** *(2006.01)*    **G01N 30/72** *(2006.01)*

(86) Internationale Anmeldenummer:
**PCT/EP2006/000883**

(87) Internationale Veröffentlichungsnummer:
**WO 2006/082042 (10.08.2006 Gazette 2006/32)**

(54) **VERFAHREN UND SYSTEM ZUR MASSENSPEKTRENANALYSE**

METHOD AND SYSTEM FOR MASS SPECTROMETRY ANALYSIS

PROCÉDÉ ET SYSTÈME POUR l'ANALYSE SPECTRALE DE MASSE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.02.2005 EP 05100825**

(43) Veröffentlichungstag der Anmeldung:
**24.10.2007 Patentblatt 2007/43**

(73) Patentinhaber: **Metanomics GmbH**
**10589 Berlin (DE)**

(72) Erfinder:
- **HEROLD, Michael, Manfred**
  **10589 Berlin (DE)**
- **CHRISTIANSEN, Nicole**
  **13578 Berlin (DE)**
- **KLUTTIG, Martin**
  **13585 Berlin (DE)**
- **KOPKA, Joachim**
  **10405 Berlin (DE)**
- **QUEDENAU, Jörn**
  **10589 Berlin (DE)**

(74) Vertreter: **Altmann Stößel Dick Patentanwälte PartG mbB**
**Dudenstrasse 46**
**68167 Mannheim (DE)**

(56) Entgegenhaltungen:
- **STEIN S E: "An integrated Method for Spectrum Extraction and Compound Identification from Gas Chromatography/Mass Spectrometry Data" J. AM. SOC. MASS. SPECTROM., Bd. 10, 1999, Seiten 770-781, XP002278059 ELSEVIER in der Anmeldung erwähnt**
- **ANONYMOUS: "G1701CA MSD Productivity Chemstation"[Online] November 1999 (1999-11), XP002278060 AGILENT TECHNOLOGIES ONLINE LITERATURE Gefunden im Internet: URL:http://www.chem.agilent.com/scripts/LiteratureResults.asp> [gefunden am 2004-04-26]**
- **STAN HANS-JÜRGEN: "Pesticide residue analysis in foodstuffs applying capillary gas chromatography with mass spectrometric detection - State-of-the-art use of modified DFG-multimethod S19 and automated data evaluation" JOURNAL OF CHROMATOGRAPHY A, Bd. 892, 15. September 2000 (2000-09-15), Seiten 347-377, XP004212073 ELSEVIER**

EP 1 846 757 B1

**Beschreibung**

Die Erfindung betrifft ein Verfahren zur Analyse einer mehrere Substanzen beinhaltenden Probe mittels Massenspektroskopie der in einem vorgeschalteten Chromatographen zumindest zum Teil aufgetrennten Probe, ein entsprechendes Massenspektrenanalysesystem und deren Verwendung zur Analyse von einer mehrere Substanzen beinhaltenden Probe, insbesondere Pflanzenextrakten.

Die Massenspektroskopie oder Massenspektrometrie (MS) ist eine weit verbreitete Methode zur Identifikation von Substanzen bzw. Molekülen sowohl in der Organischen als auch Anorganischen Chemie. Bei der Massenspektrometrie werden die Ionen entsprechend ihrem Verhältnis Masse/Ladung (m/z) aufgetrennt und registriert. Die Registrierung der getrennten Ionen kann entweder auf einer Photoplatte geschehen oder als Ionenstrom elektrisch erfolgen. Im ersten Fall spricht man von Massenspektroskopie und im zweiten (für die analytische Chemie wichtigeren) Fall von Massenspektrometrie. Die verwendeten Geräte bezeichnet man entsprechend als Massenspektrograph bzw. Massenspektrometer. Ein Massenspektrometer besteht prinzipiell aus drei Teilen: Einer Einrichtung zur Erzeugung von Ionen ("Ionenquelle"), einer Trennvorrichtung ("Analysator") und schließlich dem Auffänger (Faraday-Käfig, Sekundärelektronen-Vervielfacher) zur Registrierung der Ionen. Zum Zubehör zählen neben der notwendigen Elektronik eine Datenverarbeitungsanlage sowie Pumpen für das benötigte Vakuum. Im folgenden werden aus Gründen der Übersichtlichkeit sowohl die Massenspektrometrie als auch die Massenspektroskopie einheitlich mit dem Begriff "Massenspektrometrie" bezeichnet.

Die Massenspektrometrie wird üblicherweise in Verbindung mit weiteren Analysemethoden, wie zum Beispiel der Gaschromatographie (GC) und der Flüssigkeitschromatographie (LC), eingesetzt, um die Analyse von Massenspektren durch vorheriges Auftrennen der Probe zu vereinfachen. Hierdurch entstehen leistungsstarke Analysegeräte, die vereinfacht gesagt durch Verzögerung der Ankunft der einzelnen Komponenten im Massenspektrometer die Analyse vereinfachen. Somit wird die Zahl der im Massenspektrometer gleichzeitig vorhandenen Moleküle bzw. Molekülspezies und Ionen, die z.B. durch Ionisierung, Umlagerung, Fragmentierungsreaktionen, usw. entstehen, reduziert und die Trennung der Massenspektren und Ionenintensitätsmaxima im zeitlichen Verlauf (Peaks) und ihre Zuordnung zu bestimmten Analyten (Substanzen) ermöglicht bzw. vereinfacht.

Normalerweise beruhen die Resultate darauf, dass die chromatographischen Intensitätsmaxima des Detektorsignals für einzelne oder mehrere Ionen (Peaks) durch ein vorbestimmtes Verfahren integriert werden. Als Kriterien für die Erkennung der richtigen Signale im Chromatogramm bzw. Massenspektrum und die Zuordnung zu den richtigen sich darin widerspiegelnden chemischen Verbindungen dienen die Retentionszeit (Zeit von der Injektion der Probe bis zum entsprechenden Signalmaximum) bzw. zusätzliche Informationen wie zum Beispiel das charakteristische Massenspektrum der Substanz, das vom Detektor bei der Retentionszeit aufgenommen wird.

Allerdings kann die massenspektrometrische Analyse der chromatographischen Ergebnisse fehlschlagen, wenn zwei oder mehrere Komponenten so nah aneinander eluieren, dass ihre Retentionszeiten sich kaum voneinander unterscheiden und sie daher fast oder gleichzeitig im Massenspektrometer eintreten. Des weiteren ist die Analyse der Ergebnisse schwierig (wenn nicht unmöglich), sobald die Zahl der in der Probe vorhandenen Substanzen ansteigt und gleichzeitig die Massenspektren von chromatographisch nicht vollständig getrennten Analyten sich nur wenig oder überhaupt nicht unterscheiden. Eine solche Situation kommt üblicherweise bei der Analyse von Abwasser, Sondermüll, organischem und biologischem Gewebe wie z.B. Pflanzenextrakten vor, wo oft mehr als 1.000 Substanzen in der Probe vorhandenen sind.

Zusätzlich kommt es häufig vor, dass die aufgenommenen Spektren "verunreinigt" sind. Die Verunreinigungen stammen beispielsweise aus der im Chromatographen eingesetzten Kapillarsäule (Ausbluten des Säulenmaterials), Verunreinigungen in der Ionenkammer oder unsachgemäßer Behandlung, d.h. Zersetzung der Probe.

Programme oder Verfahren zum Durchsuchen von Bibliotheken mit Referenzspektren und deren Vergleich mit den erhaltenen Daten sind in den oben geschilderten Fällen nur von begrenzter Hilfe.

Eine eingesetzte Methode ist die Extraktion von "reinen" Spektren der in der Mischung enthaltenen Komponenten. Ein dazu üblicherweise verwendeter Algorithmus besteht in der Extraktion des Spektrums, bei dem die zum Spektrum gehörenden Ionensignale gleichzeitig ein Maximum erreichen, d.h. es wird ein Spektrum generiert, welches nur solche Masse/Intensitätspaare umfasst, deren Masse/Ladungsverhältnisse Maxima an oder direkt neben der ausgewählten Messung im Chromatogramm besitzen. Dieser Algorithmus ist nach seinen Entdeckern als Biller-Biemann-Algorithmus benannt (J. Biller, K. Biemann, Anal Letters 1974, 7, 515). Obwohl dieser Algorithmus einfach zu implementieren ist, sind seine Ergebnisse aufgrund seiner nicht ausreichenden Auflösung wenig hilfreich.

Ein leistungsfähigeres Verfahren basiert auf der Analyse der Form der Peaks, wobei davon ausgegangen wird, dass alle Peaks, die' zu gleichen Komponenten gehören, die gleiche Signalform aufweisen (R. G. Dromey et al. Anal. Chem. 1976, 48, 1365).

Ein alternatives Verfahren besteht darin, den Biller-Biemann-Algorithmus um die Peak-Form-Analyse zu erweitern und trotzdem seine Einfachheit beizubehalten, um eine kommerzielle Anwendung zu ermöglichen (B. N. Colby, J. Am. Soc. Mass Spectrom. 1992, 3, 3558 - 3562).

Aus diesen Bemühungen zur Deconvolution von Spektren sind Verfahren und kommerziell erhältliche Produkte hervorgegangen, zum Beispiel AMDIS (Automated Mass Spectral Deconvolution & Identification System, U. S. Department of Commerce, National Institute of Standards and Technology (NIST)). Dieses Verfahren zur automatischen Findung und Unterscheidung möglichst vieler verschiedener in der Messung erfasster Komponenten (Substanzen) ist beschrieben in S. E. Stein, J. Am. Soc. Mass. Spektrom. 1999, 10, 770-781 (und http://chemdata.nist.gov/mass-spc/amdis/method.pdf).

Die US-PS 6 147 344 offenbart ein Verfahren zur automatischen Analyse von massenspektrometrischen Daten von Mischungen chemischer Verbindungen bestehend aus einer Serie von Überprüfungen zur Eliminierung oder Reduktionen von falschen Peak-Zuordnungen aufgrund von Hintergrundrauschen, Systemauflösung, System-Verunreinigungen, mehrfach geladenen Ionen und Isotopenaustausch. Dazu wird zunächst ein Massenspektrum einer Kontrollsubstanz aufgenommen, mittels welchem Massenspektren nachfolgender Proben von statistischem Hintergrundrauschen und Kontaminationssignalen durch Subtraktion befreit werden. Zusätzlich werden durch Referenzspektren-Vergleich Peaks mit falscher Breite oder Retentionszeit unter Berücksichtigung von Isotopenverteilungen von der weiteren Bearbeitung und Analyse ausgenommen.

Die US-PS 5 175 430 lehrt ein Verfahren und eine Vorrichtung zur Durchführung von Zeit-Kompressions-Chromatographie (time compression) mit Array-Detektion in der Massenspektrometrie, wobei mittels eines mathematischen Verfahrens die durch die Kompression verloren gegangenen Informationen wiedergewonnen werden, so dass trotz der Beschleunigung der Analysezeit und verbesserten Substanzidentifizierung eine hohe Sensitivität erreicht wird.

Die US-PS 5 453 613 offenbart ein Massenspektrumsanalysesystem zur automatischen Erkennung, Deconvolution und Identifizierung von Massenspektren. Mit gewöhnlichen Methoden aufgenommene Massenspektrendaten werden von der chronologischen Reihenfolge zunächst nach der Ionenmasse und anschließend innerhalb jeder Ionenmassen-Gruppierung wiederum chronologisch umsortiert. Für jede gemessene Ionenmasse werden lokale Peaks oder Maxima mittels Integration identifiziert, sortiert und derart aufgeteilt, dass ein Satz von deconvolutierten Spektren erhalten wird, in denen jedes Element des Satzes eine identifizierbare Substanz darstellt. Anschließend werden die Substanzen mittels Referenzspektren-Vergleich durch gewöhnliche statistische Vergleichsverfahren identifiziert.

Diese Verfahren erlauben zwar teilweise die Deconvolution von Spektren und die anschließende Identifikation von in der Probe enthaltenen Substanzen anhand von Referenzspektren-Bibliotheken, allerdings erlauben sie dies nur für bekannte Substanzen mit entsprechend bekannten Massenspektren, nach denen gezielt gesucht. Darüber hinaus unterlaufen den Verfahren fehlerhafte Zuweisungen, so dass es zur falschen Identifizierung von Substanzen kommen kann, insbesondere bei Proben mit vielen Komponenten.

Keines der bekannten Verfahren ist alleine in der Lage, alle Komponenten einer Probe anhand der durch die Chromatographie und Massenspektrometrie gewonnenen Daten zu identifizieren, Spektren vollständig und ohne Fehler zu deconvolutionieren und dabei noch automatisch abzulaufen.

Aufgabe der vorliegenden Erfindung ist es daher, ein Verfahren zur Verfügung zu stellen, das in der Lage ist, mittels der chromatographischen und massenspektrometrischen Daten einer Probe möglichst alle darin enthaltenen Komponenten (oder zumindest einen Großteil davon) zuverlässig zu identifizieren. Zusätzlich soll das Verfahren möglichst automatisch ablaufen und den sicheren Umgang mit Peaks unbekannter Substanzen erlauben, d.h. auch Signale unbekannter Substanzen sollen registriert werden können und eine konsistente Zuordnung über eine große Zahl an Proben sichergestellt sein.

Deshalb wird erfindungsgemäß ein Verfahren zur Analyse einer mehrere Substanzen beinhaltenden Probe mit den Merkmalen des Anspruchs 1 vorgeschlagen.

Darüber hinaus werden erfindungsgemäß ein Massenspektrenanalysesystem mit den Merkmalen des Anspruchs 27, ein Laborinformationsverwaltungssystem (LIMS) mit den Merkmalen des Anspruchs 29 sowie eine Verwendung des Verfahrens und des Systems zur Analyse von einer mehrere Substanzen beinhaltenden Probe, insbesondere Pflanzenextrakten, die oft viele Hundert bis mehrere Tausend Substanzen beinhalten, gemäß Anspruch 30 vorgeschlagen.

Durch die nachgeschaltete Überprüfung der Zuweisung der chromatographischen Peaks bzw. der Massenspektren durch die Auswertungseinrichtungen wird es möglich, alle in einer Probe enthaltenen bekannten Komponenten (oder zumindest einen Großteil davon) zuverläsig zu identifizieren. Zusätzlich kann das Verfahren automatisiert ablaufen und erlaubt einen sicheren Umgang mit Peaks unbekannter Substanzen. Signale unbekannter Substanzen werden gezielt registriert und eine konsistente Zuordnung über eine große Zahl an Proben wird sichergestellt.

Durch das erfindungsgemäße Verfahren werden Peaks, die nicht gezielt gesucht wurden (d.h. Peaks ohne Referenzspektrum und Lage im Chromatogramm (Retentionszeit, Retentionsindex), insbesondere Peaks unbekannter Substanzen), als solche markiert und einer gesonderten Behandlung zugeführt, was die Auffindung neuer Substanzen stark vereinfacht und beschleunigt, insbesondere bei großen Datenmengen.

Grundsätzlich ist zwischen sogenannten "chromatographischen Peaks" und "Massenpeaks" zu unterscheiden. Ein chromatographischer Peak stellt ein Maximum einer Verteilung/Kurve über die Zeit in einer chromatographischen Trennung dar und ist im Idealfall gaußförmig ausgebildet. Dabei ist es ohne Bedeutung, ob der Peak aus dem zeitlich verlaufenden Signal eines einzelnen als selektiv vorgegebenen Ions oder mehrerer addierter Ionensignale oder der Addition aller Ionensignale hervorgeht. (Letzteres ist der sogenannte TIC-Peak (TIC: Total Ion Current).)

Von diesen chromatographischen Peaks zu unterscheiden sind Massenpeaks als Massensignale in einem Massenspektrum, bei denen es sich um Maxima der Signal-Intensität über die Massenachse innerhalb eines Massenspektrums handelt. Die Massenspektren werden genau wie Chromatogramme als Intensitätsverteilung über die Zeit aufgenommen, wobei mit der Zeit die zur Detektion ausgewählte Ionenmasse verändert wird. Diese Zeit ist aber kurz verglichen mit der Dauer einer Chromatographie. Meist stellt ein komplettes Massenspektrum nur einen einzigen zeitlichen Datenpunkt in einem üblichen Chromatogramm dar. Die Maxima innerhalb eines solchen Massenspektrums von bspw. ca. 0,3 s Dauer werden zur Datenreduktion üblicherweise bereits in der Messeinrichtung integriert. Aufgrund der niedrigen Massenauflösung in den oft verwendeten Quadrupol-Detektoren werden die erhaltenen Massenspektren im sogenannten Centroid-Modus abgespeichert, d.h. es wird pro Intensitätsmaximum im Massenspektrum nur ein Strich dargestellt, der Intensität und Masse als Information umfasst, also keine zeitliche Verteilung mehr enthält. Die Information des zeitlichen Verlaufs (Retentionszeit) ist aber nicht verloren, sondern zum jeweiligen Massenpeak abgespeichert. Im folgenden wird der Einfachheit halber der Ausdruck "Massenpeak" immer dann verwendet, wenn es sich um einen Peak in einem Massenspektrum handelt. In allen anderen Fällen ist mit dem Ausdruck "Peak" ein chromatographischer Peak über die Zeitachse gemeint.

Im Normalfall ergibt dies, z.B. bei Verwendung von Massenspektrometern mit niedriger Massenauflösung, d.h. mit Einheitsmassenauflösung, nur einen Massenpeak pro Dalton. In Massenspektren werden dann der Einfachheit halber in der Regel nur noch die (ganzzahligen) Einheitsmassen dargestellt. Wechselt man wieder zum Chromatogramm zurück und stellt eine ausgewählte selektive Ionenmasse (z.B. 217) chromatographisch über die Zeit dar, so kann diese Masse selektiv für die chromatographische Integration genutzt werden. Es ist jedoch hinterlegt, dass alle Ionen deren Centroid (d.h. massenspektrometrisches Maximum) in einen Bereich z.B. von 217 - 0,3 bis 217 + 0,7 fällt, bei der chromatographischen Integration über die Zeit miterfasst werden.

Als chromatographische Methoden kommen alle zur Kombination mit der Massenspektrometrie geeigneten Verfahren in Betracht, z.B. Gaschromatographie (GC), Flüssigkeitschromatographie (LC) oder Hochleistungs- (Hochdruck-)Flüssigkeitschromatographie (High Performance (High Pressure) Liquid Chromatography, HPLC).

Zur Aufnahme der Massenspektren eignen sich alle bekannten Methoden und Geräte. Beispielhaft genannt seien Quadrupol-Massenspektrometer, Flugzeitmassenspektrometer, Fourier-Transform-Massenspektrometer und Sektorfeldgeräte. Für weitere Ausführungen sei auf das Römpp Lexikon Chemie - CD Version 2.0, Stuttgart/New York: Georg Thieme Verlag 1999 verwiesen.

Unter Deconvolution wird in der vorliegenden Anmeldung die Extraktion von einzelnen Ionen (Masse/Ladungsverhältnisse) aus einer Serie von Massenspektren verstanden, wobei von der Tatsache Gebrauch gemacht wird, dass alle Intensitäten der Masse/Ladungsverhältnisse eines Spektrums einer Komponente sich gleichzeitig und gleichförmig beim Eluieren dieser Komponente bzw. Substanz verändern. Mit anderen Worten: die Verhältnisse der Intensitäten der Signale (Peaks) zueinander bleiben gleich. Es sind zwei Arten von Deconvolution möglich: Zum einen die Deconvolution, in welcher die Massenspektrendaten analysiert werden, um Retentionszeiten, Mengen und Identitäten der eluierenden Substanzen ohne vorherige Kenntnis der Probezusammensetzung zu bestimmen (Vorwärtssuche genannt), und zum anderen die Deconvolution, in welcher die Menge und Retentionszeiten spezifischer Zielsubstanzen durch Analyse der Formen der charakteristischen Massenspektren (Rückwärtssuche genannt) bestimmt werden (vgl. US-PS 5 175 430 Spalte 6, Zeile 16. bis Spalte 7, Zeile 28).

Unter Intensitätsmessung wird die Extraktion und Integration (Flächenbestimmung eines Signals) oder Signalhöhenbestimmung eines Peaks verstanden. Verfahren hierzu sind dem Fachmann: bekannt. Beispielsweise ist die Integration mit Hilfe der Fast-Fourier-Transformation möglich.

Üblicherweise erfolgt eine Zuordnung der aus den Massenspektren erhaltenen Daten mittels eines Vergleichs mit Referenzspektren von in der Probe enthaltenen (bekannten) Substanzen. Hierzu sind entsprechende Bibliotheken und kommerzielle Programme erhältlich und teilweise auch in die Auswertungseinrichtungen integriert.

Als jeweils alleine oder in Kombination mit der Validierungseinrichtung einsetzbare Auswertungseinrichtungen können bspw. AMDIS als erste Auswertungseinrichtung und Chemstation als zweite Auswertungseinrichtung eingesetzt werden.

Diese beiden Auswertungseinrichtungen unterscheiden sich voneinander darin, dass die zweite Auswertungseinrichtung (bspw. Chemstation) zur Peak-Findung Zeitfenster benutzt, wobei die erhaltenen Peaks bei einer vordefinierten Ionenmasse integriert werden, wohingegen die erste Auswertungseinrichtung (bspw. Amdis) einen Datensatz zunächst in einzelne Komponenten zerlegt und diese dann zur Identifizierung der Ziel-Substanzen mit vorgegebenen Spektren in einer Bibliothek vergleicht, wobei anstelle der Retentionszeit (RT) der Retentionsindex (RI) eingesetzt wird. Bei der beispielhaft angeführten Chemstation (GC/MS-Chemstation, Agilent Technology, Prod. Nr G1701 CA) handelt es sich um eine typische Integrationssoftware für 3-dimensionale Messdaten (Zeit, Masse, Intensität), wobei die Intensität eines Ions durch Integration über die Zeit oder über seine maximale Höhe über der Basislinie zu bestimmen ist (unter Vorgabe von Integrationsparametern wie Zeitfenster, Schwellwerte, qualifizierende Massen etc.). Bei dem beispielhaft für die erste Auswertungseinrichtung angeführten System AMDIS ist die Vorgabe von Deconvolutionseinstellungen und optional von Referenzspektren, RI-Kalibration und RI-Werten zur Substanzidentifikation erforderlich (siehe Manual unter http://chemdata.nist.gov/mass-spc/amdis/AMDIS.pdf).

Diese beiden kommerziell erhältlichen Auswertungseinrichtungen (oder Programme) überprüfen nur die Peaks von Ziel-Substanzen, d.h. nur diejenigen Ziel-Peaks werden gezielt gesucht, die zuvor als Parameter eingegeben wurden.. Dabei handelt es sich um Angaben zu Retentionszeiten (RT), Retentionsindizes (RI) oder typischen Ionen im Chromatogramm bzw. Massenspektrum, nach denen die Verfahren aktiv suchen sollen. Aufgrund der unterschiedlichen Methoden bei der Suche nach Ziel-Peaks bzw. Ziel-Substanzen kommt es jedoch zu verschiedenen Aussagen und zu unterschiedlicher Qualität der Aussagen.

H.-J. Stan,J. Chromatogr. A, 892 (2000), pp. 347-377 offenbart automatisierte Analyse der Chromatographie-Massenspektroskopie-Daten mittels eines zusätzlichen Überprüfungsprogramm.

Erfindungsgemäß werden somit zwei unterschiedliche Auswertungseinrichtungen verwendet, nämlich eine erste Auswertungseinrichtung zur Deconvolution der von der Messeinrichtung erhaltenen Massenspektren und eine zweite Auswertungseinrichtung zur Intensitätsermittlung der von der Messeinrichtung erhaltenen Peaks der Ionen der Massenspektren. Die von diesen beiden Auswertungseinrichtungen vorgenommenen (Peak-)Zuweisungen werden überprüft, und es erfolgt ein Vergleich der von den beiden Auswertungseinrichtungen jeweils vorgenommenen Zuweisungen in einer dazu vorgesehenen Validierungseinrichtung. Mit diesem erfindungsgemäßen Prinzip wird die Genauigkeit der Gesamt-Auswertung bzw. Zuweisung durch Ausnutzung der unterschiedlichen Eigenschaften der Auswertungseinrichtungen erhöht. Außerdem werden Fehlzuweisungen vermieden bzw. zumindest verringert. Auch ist ein automatischer Ablauf des Verfahrens möglich. Zudem ist die Erkennungsleistung bzw. die Identifikation von in der Probe enthaltenen Substanzen stark verbessert.

Dies ist insbesondere wichtig bei der Analyse von Proben biologischen Materials, z.B. aus Pflanzen, Tieren, Mikroorganismen usw., in dem viele Hundert bis Tausend Verbindungen vorhanden sein können. Dies ist beispielsweise bei der Suche nach Metaboliten oder neuen Substanzen notwendig. Das Verfahren eignet sich insbesondere dazu, automatisiert zu werden, so daß eine hocheffiziente Analyse einer Vielzahl von Proben pro Tag (High-Through-Put-Analyse, HTP) ermöglicht wird. Diese Datenmenge wäre - falls überhaupt - manuell kaum zu bewältigen. Die Erfindung kann neben den in der Beschreibung nachfolgend explizit genannten Bereichen der Pflanzenextrakte und der Erforschung von Substanzen in Pflanzen und marinen Schwämmen selbstverständlich in allen möglichen und denkbaren biologischen Materialien, insbesondere auch Gewebe, Körperflüssigkeiten, Zellkulturen usw., angewendet werden.

Es ist aber auch im Rahmen der Erfindung möglich und ggf. nötig die beschriebenen kommerziellen Auswertungseinrichtungen AMDIS und/oder (insbesondere) Chemstation durch proprietäre Ergänzungen zu erweitern. Insbesondere betrifft dies Verbesserungen der Bestimmung der Übereinstimmungsqualitäten (M2, siehe unten). Auch um die Bestimmung eines Signal/Rauschverhältnisses (S/N) und/oder eines Blindwertes für die Peaks können die Auswertungseinrichtungen (insbesondere Chemstation) erweitert werden.

Zur Bestimmung des Signal/Rauschverhältnisses wird vor und hinter dem jeweiligen Peak das Rauschen für das Ionensignal des Peaks nach dem Fachmann bekannten Methoden wie Peak-to-Peak-Noise oder Root-Mean-Square-Noise (RMS) bestimmt und anschließend zusammen mit der Peak-Signalintensität das jeweilige S/N-Verhältnis vor und hinter dem Peak errechnet. Dieser für einen Peak erhaltene Wert muss eine vorgegebene Grenze überschreiten, wenn der Peak einer Substanz zugewiesen und zuverlässig quantitativ ausgewertet werden soll. Es genügt allerdings, wenn entweder das S/N-Verhältnis vor oder hinter dem jeweiligen Peak den Grenzwert überschreitet.

Die Signalintensität eines Peaks (Peakhöhe oder Peakfläche oder auch auf einen internen Standard normierte Peakhöhe oder Peakfläche) muss für eine zuverlässige quantitative Auswertung außerdem auch einen Grenzwert übersteigen, der aus dem mittleren Messwert von Blindproben (Blindwert) und seiner Standardabweichung in einer längeren Vorperiode substanz- und analysenmethodenspezifisch bestimmt wird.

Diese Bestimmungen sihd deshalb von Interesse, weil das S/N-Verhältnis und der zu überschreitende Signalintensitätsgrenzwert ein Maßstab für die Güte der Messung sind. So sollten für die Nachweisgrenze, die Erfassungsgrenze und die Bestimmungsgrenze eines Peaks, insbesondere eines durch die zweite Auswertungseinrichtung (B) einer Substanz zugewiesenen Peaks (b), die Werte oberhalb eines festgelegten Signal/Rauschverhältnisses und eines Signalintensitätsgrenzwerts liegen. Nur dann kann gewährleistet werden, dass ein Signal bzw. Peak zu Recht einer Substanz zugewiesen wurde und der Peak in einer nachfolgenden Analyse der Daten zuverlässig quantitativ ausgewertet werden kann.

Es wird also jeweils für die Nachweisgrenze, die Erfassungsgrenze und die Bestimmungsgrenze jeweils ein Grenzwert für das S/N-Verhältnis und ein Grenzwert resultierend aus Blindwertmessungen (letzterer substanz- und analysenmethodenspezifisch) festgelegt, die der zu untersuchende Peak überschreiten muss. Ansonsten wird er invalidiert.

Die festgelegten Signal/Rauschverhältnisse und die Signalintensitätsgrenzwerte des Peaks steigen daher bevorzugterweise in folgender Reihenfolge an: Nachweisgrenze, Erfassungsgrenze, Bestimmungsgrenze. Somit werden z.B. bei einem positiven Test der Bestimmungsgrenze automatisch auch die Nachweisgrenze und Erfassungsgrenze positiv durchlaufen.

Als Vorrichtung zur Durchführung des erfindungsgemäßen Verfahrens eignen sich beispielsweise die handelsüblichen GC/MS-, LC/MS- oder HPLC/MS-Geräte. Diese umfassen üblicherweise einen Rechner (Computer oder Datenverarbeitungsanlage), der in der Lage ist, das erfindungsgemäße Verfahren bei dessen Umsetzung in ein Programm (Software) auszuführen. Es wäre aber auch eine Ausführung in Form von programmierbaren fest-verdrahteten Logikbausteinen möglich.

Die Erfindung umfasst auch ein Computerprogramm mit Programmcode, der dazu geeignet ist, ein erfindungsgemäßes Verfahren auszuführen, wenn das Computerprogramm auf einer geeigneten Recheneinrichtung abläuft. Es werden sowohl das Computerprogramm selbst als auch das auf einem computerlesbaren Medium gespeicherte Computerprogramm beansprucht.

Zur Durchführung des erfindungsgemäßen Verfahrens und als erste und/oder zweite Auswertungseinrichtung sind programmtechnisch eingerichtete Datenverarbeitungsanlagen geeignet.

Des weiteren ist es möglich mit dem erfindungsgemäßen Verfahren eine grafische Darstellung aller Ergebnisse (z.B. wie Peakattribute, wie Flächen, relative und normierte und korrigierte Flächen, Retentionszeit, Retentionsindex usw.) selektiv einschränkbar nach Probenkriterien (Qualität, Probentyp, Messgerät, Zeitraum usw.) und Peakkriterien (Validität, Auswertungstyp usw.) zu verbinden, was die Optimierung und Analyse der Ergebnisse erleichtert und verbessert.

Auch ist eine Kombination mit der Qualitätsanalyse möglich und sinnvoll, da hierdurch ein hoher Automatisierungsgrad erreichbar ist und somit ein großer Probendurchsatz bei hoher Qualität der Ergebnisse möglich wird. Zudem wird sichergestellt, dass unbekannte Substanzen, also mögliche Verunreinigungen oder neu aufgetretene Signale von Interesse, nach denen ohne Kenntnis nicht gezielt gesucht werden kann, mittels des erfindungsgemäßen Verfahrens angezeigt werden und somit nicht "untergehen". Solche als neu aufgetreten angezeigte Substanzen können dadurch gezielt und automatisiert gesammelt werden und dienen dann mit ihren Informationen wie Massenspektrum, Retentionszeit, Retentionsindex und Intensität als Referenz, wenn die gleichen Substanzen später erneut auftreten.

Des weiteren kann die Validierungseinrichtung, soweit dies nützlich erscheint, auch dazu benutzt werden, normierte oder korrigierte Werte zu berechnen, z.B. Normierung der Peaks auf die Intensität eines Standards oder/und auf die Probenmenge (Einwage) oder/und Subtraktion von Blindwertanteilen bestimmter Peaks in einer Messreihe.

Die Erfindung eignet sich auch zur Qualitätsüberprüfung (Sicherung) durch die flexiblen (also frei kombinierbaren) Regeln, und es ist auch leicht, eine automatische Grenzwertüberprüfung einzubauen, und zwar selektiv unterschiedlich (d.h. andere Grenzwerte) für bestimmte Analyten (also Proben bzw. Substanzen). Grenzwerte können z.B. von Intensitäten, Retentionszeiten, Retentionsindizes für einzelne Peaks überprüft und ggf. invalidiert werden, oder es können probenübergreifende Werte, wie z.B. die Wiederfindungsrate oder relative Standardabweichung von ermittelten Substanzkonzentrationen (z.B. von den Peakintensitäten der Peaks zu einem Analyten in allen Messproben oder in den Qualitätskontrollproben der Sequenz), berechnet und gegen festgelegte Grenzwerte geprüft werden. Dies kann ggf. zur Invalidierung von ganzen Proben, Fraktionen oder Gruppen aus Proben oder Fraktionen verwendet werden, welche vorher festgelegte Qualitätskriterien nicht erfüllen.

Dementsprechend eignet sich das erfindungsgemäße Verfahren auch zur Analyse in der Erforschung von Substanzen in Pflanzen, marinen Schwämmen usw.

Das erfindungsgemäße Verfahren definiert Peak- und Proben (Sample)-orientierte Regeln zur Überprüfung der von der ersten bzw. der zweiten Auswertungseinrichtung stammenden Daten (Peaks). Die Nutzung einzelner Regeln ist abhängig von der jeweiligen Substanz (bzw. Peak), so dass unterschiedliche Regelkombinationen für unterschiedliche Probleme bei verschiedenen Substanzen sinnvoll sind. Es ist nicht notwendig, dass alle Regeln aktiviert, d.h. bei jeder Probe oder Substanz angewendet werden. Auch werden von der Validierungseinrichtung nicht für jeden der von den beiden Auswertungseinrichtungenzugewiesenen Peak alle Regeln ausgeführt. Bestimmte Regeln werden jeweils nur für die von einer der beiden Auswertungseinrichtungen, andere für die von der entsprechend anderen Auswertungseinrichtung und wieder andere für die von beiden Auswertungseinrichtungen zugewiesenen Peaks ausgeführt.

Dies ist so zu verstehen, daß nur die jeweils angegebenen Regeln überhaupt wirksam werden, wenn nur Peaks der ersten Auswertungseinrichtung bzw. nur Peaks der zweiten Auswertungseinrichtung in der Validierungseinrichtung isoliert behandelt werden, also auch kein Vergleich zwischen den jeweiligen Peaks stattfindet. Jeweils andere als die angegebenen Regeln hätten dann keine Auswirkung, auch wenn sie aktiviert wären.

Es sei noch erwähnt, dass die Regeln durch den modularen Aufbau jederzeit auf einfache Weise verändert, ergänzt oder erweitert werden können.

Die Erfindung wird im folgenden anhand eines Ausführungsbeispieles unter Bezugnahme auf die beigefügten Zeichnungen näher beschrieben und erläutert. Das dargestellte und beschriebene Ausführungsbeispiel und die dargestellte und erläuterte Abfolge erfindungsgemäßer Regeln und deren Inhalt sind als beispielhafte Erläuterung der Erfindung ohne Einschränkung des in den Patentansprüchen beschriebenen Erfindungsgegenstands zu verstehen.

Figur 1 zeigt ein Flussdiagramm eines erfindungsgemäßen Verfahrens und darin enthaltener Regeln.

Figuren 2 bis 7 zeigen die Anwendung der Regeln P8 und P20 der Figur 1 auf die Massenspektren-Daten mehrerer Proben.

Figuren 8 bis 10 zeigen die Anwendung der Regeln P1, S1 und S2 der Figur 1 auf die Massenspektren-Daten mehrerer Proben.

Figuren 11 und 12 zeigen die Anwendung der Regel P21 der Figur 1 auf die Massenspektren-Daten mehrerer Proben.

Figuren 13 bis 15 zeigen die Anwendung der linearen Modellierung nach Regel P9a der Figur 1 auf die Massenspektren-Daten mehrerer Proben.

Figur 16 zeigt einen schematischen Ablauf des erfindungsgemäßen Analyse- und Auswertungsprinzips.

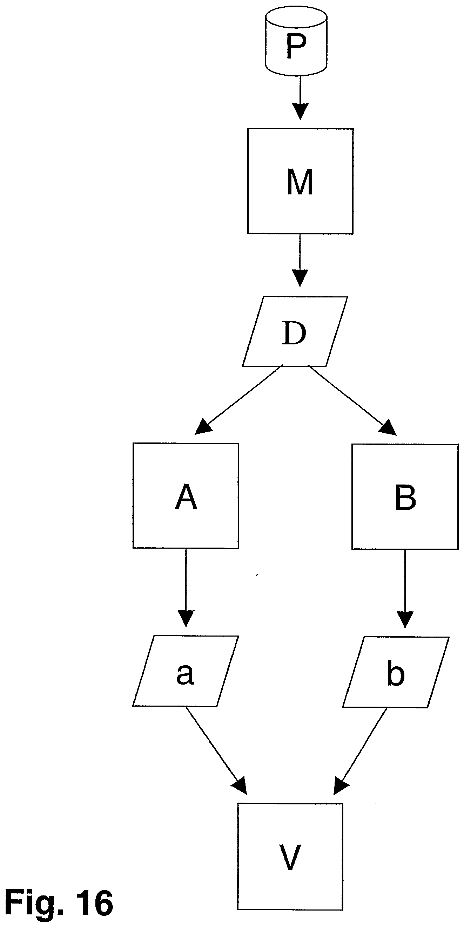

Figur 16 zeigt, wie gemäß der vorliegenden Erfindung eine Probe P verarbeitet und analysiert und das erhaltene Massenspektrum ausgewertet wird.

Eine Probe P wird in an sich bekannter Weise in eine Messeinrichtung M gegeben, die eine Mehrzahl von Peaks umfassende Massenspektren-Daten D ausgibt. Diese Massenspektren-Daten D werden erfindungsgemäß zwei Auswertungseinrichtungen, nämlich einer ersten Auswertungseinrichtung A und einer zweiten Auswertungseinrichtung B zugeführt.

Die erste Auswertungseinrichtung A deconvolutiert die eingegebenen Massenspektren-Daten D nach einem Verfahren, wie es bspw. aus dem bereits eingangs erwähnten und beschriebenen System AMDIS bekannt ist. Die zweite Auswertungseinrichtung B ermittelt die Intensität der in den Massenspektren-Daten D enthaltenen Peaks nach einem Verfahren, wie es bspw. aus dem bereits eingangs erwähnten und beschriebenen System Chemstation bekannt ist.

Als Ausgabe aus den Auswertungeinrichtungen A und B wird eine Zuordnung von Peaks a bzw. b zu in der analysierten Probe möglicherweise enthaltenen Substanzen erhalten. Die derart identifizierten Peaks werden zur weiteren Auswertung und erfindungsgemäßen Überprüfung in eine Validierungseinrichtung V eingegeben.

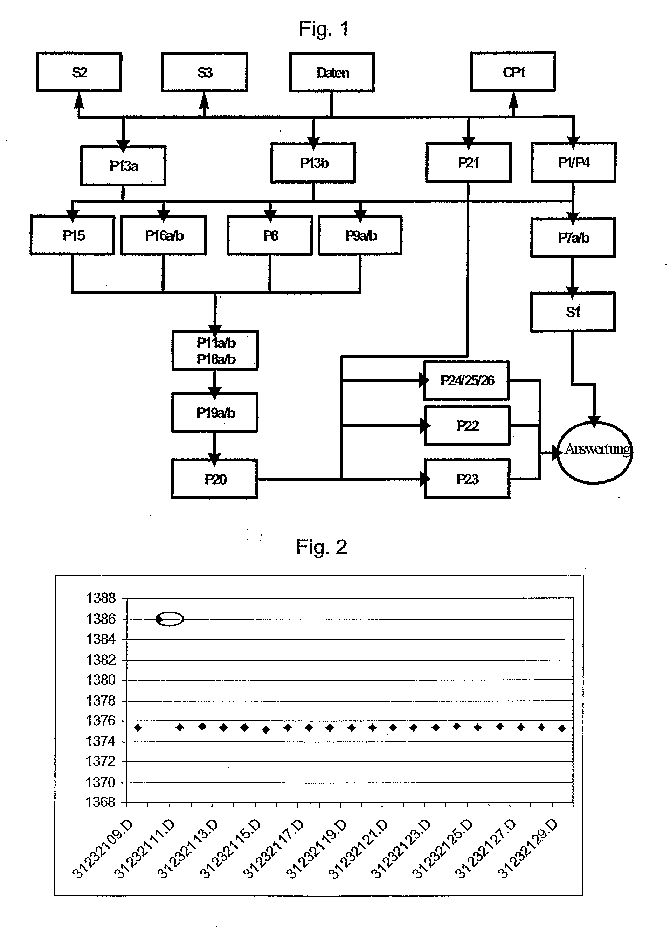

Figur 1 zeigt eine Abfolge von diversen Regeln, anhand derer die Überprüfung in der Validierungseinrichtung V erfolgen kann. Die in der Figur 1 dargestellten Regeln sind aus Gründen der Übersichtlichkeit in der Tabelle 1 aufgeführt. Zu unterscheiden sind dabei sogenannte Sample-Regeln, deren Numerierung mit dem Buchstaben S beginnt, und sogenannte Peak-Regeln, deren Numerierung mit dem Buchstaben P beginnt.

Die in Figur 1 dargestellte Abfolge der Regeln ist nicht zwingend. Die erfindungsgemäßen Regeln können auch in der Reihenfolge variiert werden. Insbesondere müssen nicht alle vorausgehenden Regeln aktiviert werden, um eine im Flussdiagramm nachfolgende Regel auszuführen. Die Regeln sind also nicht voneinander abhängig.

Es ist nicht notwendig, dass alle Regeln aktiviert sind, d.h. bei jeder Probe oder Substanz angewendet werden. Auch müssen nicht für jede der von den beiden Auswertungseinrichtungen A und B zugewiesenen Peaks alle Regeln ausgeführt werden. Bestimmte Regeln werden jeweils nur für von einer der beiden Auswertungseinrichtungen, andere für von der entsprechend anderen Auswertungseinrichtung und wieder andere für von beiden Auswertungseinrichtungen zugewiesene Peaks ausgeführt.

Wirksame (also in Frage kommende) Regeln für die Überprüfung der Peaks a von der ersten Auswertungseinrichtung A durch die Validierungseinrichtung sind im vorliegenden Beispiel die Regeln P4, P7b, P13a, P15, P16a, P16b, P18a, P18b, P19b und P22. Wirksame (also in Frage kommende) Regeln für die Überprüfung der Peaks b von der zweiten Auswertungseinrichtung B durch die Validierungseinrichtung sind im vorliegenden Beispiel analog die Regeln P1, P21, P8, P9a, P9b, P11a, P11b und P23. Die weiteren Peak-Regeln werden nur bei Einsatz beider Auswertungseinrichtungen A, B ausgeführt (P19a, P7a) bzw. werden von beiden Auswerteverfahren der beiden Auswertungseinrichtungen A, B unabhängig voneinander benutzt (P13b, P20).

Die Regeln P13a (nur für die erste Auswertungseinrichtung A), P13b (für beide Auswertungseinrichtungen A, B) und P21 (nur für die zweite Auswertungseinrichtung B) werden vom Ablauf sinnvollerweise am Anfang plaziert, müssen aber für die folgenden Regeln nicht zwingend angewendet bzw. aktiviert werden.

Für die zweite Auswertungseinrichtung B sollte zuerst die Regel P1 geprüft werden. Anschließend können die Regeln P8, P9a/b, P11a/b beliebig angewendet/kombiniert werden (auch gemeinsam). Lediglich im Hinblick auf die Reihenfolge des Prüfungsablaufes sollte die Regel P11a/b am Schluss angewendet werden, da diese Regel Analyten untereinander vergleicht und nicht nur einen einzelnen Analyten mit einem definierten Standard. Aus diesem Grunde ist es sinnvoll, die Regeln (P8,9a/b) zur Prüfung des RI (sofern sie aktiviert sind) vorher durchzuführen, damit der Referenzpeak für die Regel P11a/b (sofern sie aktiviert ist) vorher möglichst umfassend geprüft wurde.

Analoges gilt für die erste Auswertungseinrich-

tung A und die Regel P4. Anschließend können jeweils optional oder auch in Kombination die Regeln P15, P16a/b und P18a/b (P18a/b am Schluss, falls aktiviert) durchgeführt werden.

Die Vergleiche durch die Regeln P7a bezüglich der Retentionszeit (hauptsächlich sinnvoll für Zeitstandards) und P19a bezüglich des Retentionsindex zwischen den Auswertungseinrichtungen A und B sind natürlich nur dann sinnvoll, wenn auch beide Verfahren der Auswertungsreinrichtungen A und B verwendet werden. Jeweils die b-Regel (7b und 19b) kann aber auch isoliert von der ersten Auswertungseinrichtung (A) angewandt werden, so dass unabhängig von der zweiten Auswertungseinrichtung (B) Peaks invalidiert werden, bis als einziger der mit der größten Intensität übrigbleibt. Es ist sinnvoll, wenn die Verfahrensvergleiche P7a bzw. P19a vom Ablauf her nach den eigentlichen Einzelprüfungen P1/4 bzw. P8/9/11/15/16/18 durchgeführt werden. Da diese Einzelprüfungen aber nicht aktiviert sein müssen, sind sie keine zwingende Voraussetzung für die Vergleiche.

Ähnliches gilt für die restlichen Regeln P22 (nur für die erste Auswertungseinrichtung A) und P23 (nur für die zweite Auswertungseinrichtung B) sowie P20 und S1. Sie sollten vom Ablauf her sinnvollerweise am Ende stehen, da sie die Invalidierung von Peaks durch vorausgegangene Regeln an weitere Peaks oder Proben weitergeben. Auch hier ist die Aktivierung der vorausgehenden Regeln keine zwingende Voraussetzung.

Die Validierungseinrichtung überprüft anhand von Regel P1 bzw. P4 zunächst, ob die Retentionszeiten der von den ersten bzw. der zweiten Auswertungseinrichtung A bzw. B Substanzen zugewiesenen Peaks a bzw. b innerhalb festgelegter Grenzen liegen. Diese Grenzwerte und die nachfolgenden Grenzwerte können bspw. durch den Benutzer vorgegeben und in entsprechenden Datenbanken gespeichert werden und sind wie alle Parameter für Peak-Prüfungsregeln (P1 bis P23) für die jeweilige Substanz spezifisch.

Diese beiden Regeln P1 und P4 stellen sicher, dass Substanzen, von denen bekannt ist, nach welcher Zeit sie von der Säule des Chromatographen eluieren (insbesondere Zeitstandards), nur zur Weiterverarbeitung freigegeben werden, wenn ihre Retentionszeiten nicht zu weit von den bekannten Zeiten abweichen.

Parallel dazu überprüft die Validierungseinrichtung anhand von Regel P13a, ob die Übereinstimmungsqualität M1 der von der ersten Auswertungseinrichtung A einer Substanz zugewiesenen Peaks a oberhalb festgelegter Grenzwerte liegen. Die Übereinstimmungsqualität berücksichtigt die Ähnlichkeit des aufgefundenen Spektrums einer Substanz mit einem definierten Referenzspektrum einer Bibliothek sowie die Ähnlichkeit des in gleicher Weise in der Bibliothek definierten Retentionsindexes zum experimentell gefundenen Retentionsindex. Sie liegt im Bereich von 0 bis 100 % und wird von der ersten Auswertungseinrichtung A geliefert. Anhand dieser Regel kann eine Mindestübereinstimmung eines aufgefunden Spektrums mit einem Referenzspektrum sichergestellt werden.

Im folgenden Abschnitt geht es um Peaks a von der ersten Auswertungseinrichtung A und/oder Peaks b von der zweiten Auswertungseinrichtung B, wobei die Art des Zuweisens von Peaks zu einer Substanz je nach Auswerteeinrichtung A, B unterschiedlich ist. Diese nach unterschiedlichen Verfahren von den unterschiedlichen Auswerteeinrichtungen zugewiesenen Peaks werden mit Regel 13b bezüglich ihrer Übereinstimmungsqualität (M2) mit einem zur jeweiligen Substanz hinterlegten Referenzmassenspektrum überprüft.

Demnach überprüft die Validierungseinrichtung - ebenfalls parallel - anhand von Regel P13b, ob die von der ersten Auswertungseinrichtung A und/oder der zweiten Auswertungseinrichtung B einer Substanz aufgrund der Übereinstimmungswahrscheinlichkeit (M1) zugewiesenen Peaks a bzw. aufgrund der Integrationsparameter zugewiesenen Peaks b bezüglich ihrer Übereinstimmungsqualität (M2) oberhalb festgelegter Grenzwerte liegen. Hierbei wird statistisch die Übereinstimmungswahrscheinlichkeit (M2) des Spektrums eines Peaks mit dem hinterlegten Referenzspektrum der dem Peak von der ersten oder der zweiten Auswertungseinrichtung A oder B zugewiesenen Substanz geprüft, und zwar mit einem anderen, unabhängigen Vergleichsverfahren als es der Regel P13a (M1) zugrundeliegt. Nur wenn die geforderte Genauigkeit (Grenzwert) überschritten bzw. erreicht ist, wird die Zuordnung zur weiteren Bearbeitung freigegeben.

Nach einem der obigen Schritte überprüft die Validierungseinrichtung die von den beiden Auswertungseinrichtungen A, B derselben Substanz, insbesondere einem Zeitstandard, zugewiesenen Peaks a, b anhand von Regel P7a daraufhin, ob ihre Abweichungen in der Retentionszeit (RT) voneinander innerhalb festgelegter Grenzwerte liegen. Diese Regel stellt sicher, dass die jeweils ein und derselben Substanz durch die erste und die zweite Auswertungseinrichtung A und B zugewiesenen Peaks a bzw. b in ihrer Retentionszeit nicht zu stark voneinander abweichen, d.h. dass die Peaks unabhängig vom Verfahren bei einer bestimmten Retentionszeit bzw. innerhalb bestimmter Grenzen um diese Retentionszeit liegen. Diesem Vorgehen liegt die Erkenntnis zugrunde, dass es nur eine richtige Retentionszeit geben kann, da die Retentionszeiten unabhängig vom nachfolgenden rechnerischen Auswertungsverfahren sind. Es sind lediglich minimale Unterschiede (entstehend durch die unterschiedliche Berechnung des Peakmaximums) zulässig. Die Retentionszeiten hängen für eine Substanz sozusagen "nur" von den chromatographischen Bedingungen ab.

Die Regel P7a ist aber wie oben bereits erwähnt nicht abhängig von den vorhergehenden und kann auch ohne deren Aktivierung bzw. Durchführung angewendet werden. Entsprechendes gilt ebenfalls für die folgenden Regeln.

Für den Fall, dass die erste Auswertungseinrichtung A derselben Substanz, insbesondere einem Zeitstandard, innerhalb festgelegter Grenzwerte der Retentionszeit mehrere Peaks a zugewiesen hat, welche durch die vor dieser Regel bereits durchlaufenen aktivierten Regeln noch nicht invalidiert wurden (beispielsweise P7a gehorchen, d.h. sehr eng benachbart sind und ggf. mögliche Fehldeconvolutionen darstellen), wird durch die Validierungseinrichtung anhand von Regel P7b des weiteren sichergestellt, dass nur der Peak a mit der größten Fläche weiterverarbeitet wird. Dies stellt sicher, dass nur der richtige Peak (oder zumindest mit großer Wahrscheinlichkeit immer der gleiche Peak), insbesondere als einer der Zeitstandards, für die weitere Normierung und Verarbeitung verwendet wird und in jedem Fall nur noch ein Peak für eine Substanz aus dem Verfahren der ersten Auswertungseinrichtung A übrigbleiben kann, der bspw. als einer der Zeitstandards verwendet wird. Für Zeitstandards ist die Überprüfung anhand ihres Massenspektrums und ihrer Retentionszeit besonders wichtig, da es für sie keinen berechneten, sondern nur einen zugewiesenen Retentionsindex gibt, dessen Überprüfung sinnlos wäre, Zeitstandards aber eine wichtige Grundlage der Überprüfung der Zuordnung der anderen Peaks darstellen und deshalb sicher identifiziert und überprüft werden müssen.

Außerdem wird zur Sicherstellung der korrekten Normierung und weiteren Verarbeitung durch die Validierungseinrichtung anhand von Regel S1 überprüft, ob die zu einer Probe festgelegten Peaks von Zeitstandards von der zweiten Auswertungseinrichtung B aufgefunden wurden und durch die vor dieser Regel bereits durchlaufenen aktivierten Regeln noch nicht invalidiert wurden. Mit anderen Worten wird gewährleistet, dass jeder laut Verfahren erforderliche und vorher zugegebene Zeitstandard auch registriert wurde und entsprechend der vorher durchlaufenen Regeln valide ist.

Parallel zu den voranstehend beschriebenen Überprüfungen (P13a, P13b, P1/4 und P7a/b und S1) wird durch die Validierungseinrichtung anhand von Regel P21 sichergestellt, dass die von der zweiten Auswertungseinrichtung B einer Substanz zugewiesenen Peaks b keine negativen Flächen aufweisen. Bei Peaks mit negativen Flächen handelt es sich entweder um Messfehler oder Integrationsfehler, und da diese nicht auftreten dürfen, müssen sie von der weiteren Verarbeitung ausgenommen werden.

Nach Überprüfung der Übereinstimmungsqualität (M1) gemäß Regel P13a und/oder (M2) gemäß Regel P13b bietet sich als nächstes an, dass die Validierungseinrichtung anhand von Regel P15 überprüft, ob der Retentionsindex (RI) eines von der ersten Auswertungseinrichtung A einer Substanz zugewiesenen Peaks a innerhalb festgelegter Grenzwerte liegt. Hiermit wird sichergestellt, dass nur Daten weiterverarbeitet werden, bei denen sichergestellt ist, dass die Abweichung zwischen der Zielsubstanz, nach der von der ersten Auswertungseinrichtung A gesucht wird, und der aufgefundenen Substanz nicht zu groß ist. Durch dieses Vorgehen wird eine falsche Zuordnung vermieden.

Nach Überprüfung der Übereinstimmungsqualität (M1) gemäß Regel P13a und/oder (M2) gemäß Regel P13b und beispielsweise parallel zur Überprüfung des Retentionsindex überprüft die Validierungseinrichtung anhand von Regel P16a/b (LIN_MOD), ob der Retentionsindex des Standards für die lineare Modellierung (LM-RI) und der Retentionsindex (RI) eines von der ersten Auswertungseinrichtung A einer Substanz zugewiesenen Peaks a bei Auftragung gegeneinander innerhalb festgelegter Abweichungen an oder auf einer Gerade liegen. (Anmerkung: der Retentionsindex des Standards für die lineare Modellierung wird zur Vereinfachung im folgenden als Linearmodell-Retentionsindex bezeichnet.)

Erfindungsgemäß ist gefunden worden, dass die Retentionsindizes der Peaks einer Substanz der statistischen Auswertung der linearen Regression gehorchen können, d.h. eine lineare Modellierung ihrer Werte aufgrund eines Standards möglich ist. Es wird also als Grundlage für diese Regel für eine zu prüfende Substanz und einen dazu definierten Standard vorher experimentell eine Geradengleichung für die Auftragung des RI der Substanz gegen den RI des Standards für die lineare Modellierung bestimmt (Regressionsgerade mit Steigung und Achsenabschnitt) und es werden maximal zulässige Abweichungen festgelegt und in der Datenbank hinterlegt. Nur wenn die Werte bei der Überprüfung (also bei der Anwendung der Regel) nicht zu stark von der Geradengleichung abweichen, also innerhalb der als maximal vorgegebenen Abweichungen (Grenzwerte) liegen, gehören sie tatsächlich zur gesuchten Substanz und können für die weitere Verarbeitung bzw. Analyse freigegeben werden.

Hierbei kann der Standard ein besonderer Standard für die lineare Modellierung oder eine beliebige (geeignete) in der Probe enthaltene Substanz sein. Die lineare Modellierung kann als Peak-Prüfung sowohl für jeden der Probe zugegebenen Standard, als auch für die übrigen bisher erfolgreich überprüften (d.h. validierten) Peaks von Ziel-Substanzen durchgeführt werden, falls für diese ein Standard für die lineare Modellierung bestimmt wurde. Sinnvollerweise sollte als Standard für die lineare Modellierung ein Peak vorbestimmt werden, der mit sehr hoher Sicherheit aufgefunden wird, weil ansonsten auch die Prüfung der zu prüfenden Substanz negativ ausfallen muss, wenn der Standard nicht gefunden wird. Außerdem sollte sich der für die lineare Modellierung als Standard ausgewählte Peak von seinen chromatographischen Eigenschaften her eignen, den jeweiligen Peak zu überprüfen, d.h. je ähnlicher sich die gesuchte Ziel-Substanz und der ausgewählte Standard chromatographisch verhalten (in der Regel heißt das, je ähnlicher sie sich chemisch sind), desto genauer ist die lineare Modellierung. Theoretisch ist es möglich für jede gesuchte Substanz einen gesonderten Standard zu verwenden. Ein hier als Standard für die lineare Modellierung benutzter Peak sollte selbst nicht durch diese Regel geprüft werden, ansonsten muss eine vordefinierte Reihenfolge der Prüfung der Substanzen durch diese Regel beachtet werden.

Wenn zu einer Ziel-Substanz ein Standard für die lineare Modellierung als Parameter vorgegeben ist, wird dieser zur Überprüfung der Peaks a, b eingesetzt, ansonsten werden die Regeln P16a und P16b übersprungen. Wenn der Standard für die lineare Modellierung selbst im Chromatogramm nicht gefunden wird oder nach einer der vorausgehenden Regeln negativ überprüft wurde, wird die lineare Modellierung mit negativem Prüfergebnis beendet (dies bedeutet, dass dann P16a als gescheitert vermerkt wird und P16b gar nicht mehr geprüft werden kann). Wenn der Standard für die lineare Modellierung im Chromatogramm gefunden wird und nach allen vorausgehenden Regeln positiv überprüft wurde, dann wird dieser Standard für die lineare Modellierung zur eigentlichen Prüfung des Peaks mit der linearen Modellierung benutzt. Das Ergebnis dieser Prüfung wird dann als Ergebnis zur Regel P16b gespeichert. Die Unterscheidung zwischen den beiden Regeln P16a und P16b dient also in diesem Fall der Dokumentation, welcher Schritt der Prüfung fehlschlug. Das gleiche gilt analog für die Regeln P9a/b, P11a/b und P18a/b. Bei den Regeln P7a/b, P13a/b und P19a/b stellen a und b auch jeweils Teilschritte der jeweiligen Regel dar, aber die Unterscheidung der Teilschritte ist etwas anders gelagert, entsprechend der anderen Inhalte dieser Regeln.

Ansonsten wird der Retentionsindex $Y_{RI}$ des Ziel-Peaks und der Retentionsindex $X_{RI}$ des Standards für die lineare Modellierung in Form einer Geradengleichung miteinander verglichen, d.h. gegeneinander aufgetragen, wobei

$$Y_{RI} < \alpha*X_{RI} + \beta + Delta\_oben$$

und

$$Y_{RI} > \alpha*X_{RI} + \beta + Delta\_unten$$

erfüllt sein müssen. Die Parameter $\alpha$, $\beta$ und eine maximale Abweichung nach oben und unten Delta (unterschiedlich groß vorgebbar, Delta_unten ist negativ) werden dazu als Ziel-Peak-spezifische Parameter vorgegeben. Überschreitet die Abweichung von $Y_{RI}$ das jeweilige Delta, so wird der untersuchte Peak für die weitere Analyse gesperrt.

Nach Überprüfung der Übereinstimmungsqualität der Übereinstimmungswahrscheinlichkeit (M2) gemäß Regel P13b stellt die Validierungseinrichtung anhand von Regel P8 sicher, dass der Retentionsindex (RI) eines von der zweiten Auswertungseinrichtung B einer Substanz zugewiesenen Peaks b innerhalb festgelegter Grenzwerte liegt. Hiermit wird sichergestellt, dass nur Daten weiterverarbeitet werden, bei denen sichergestellt ist, dass die Abweichung zwischen der Zielsubstanz, nach der von der zweiten Auswertungseinrichtung (B) gesucht wird, und der aufgefundenen Substanz nicht zu groß ist. Durch dieses Vorgehen wird eine falsche Zuordnung vermieden. Für Peaks b der zweiten Auswertungseinrichtung B wird der RI von der Validierungseinrichtung V nach dem angegebenen Verfahren berechnet, da Auswertungseinrichtungen des Typs B meist keine RI-Werte zur Verfügung stellen.

Analog zu Regel P16a/b und parallel zu ihr überprüft die Validierungseinrichtung anhand von Regel P9a/b (LIN_MOD), ob der Linearmodell-Retentionsindex (LM-RI) und der Retentionsindex (RI) eines von der zweiten Auswertungseinrichtung B einer Substanz zugewiesenen Peaks b bei Auftragung gegeneinander innerhalb festgelegter Abweichungen an oder auf einer Gerade liegen. Für die Einzelheiten wird auf die obigen Ausführungen zu Regel P16a/b verwiesen.

Anschließend überprüft die Validierungseinrichtung die von den beiden Auswertungseinrichtungen A, B Substanzen zugewiesenen Peaks a bzw. b anhand von Regel P11a/b bzw. Regel P18a/b daraufhin, ob diese einen festgelegten Nachbar-Peak innerhalb festgelegter Grenzwerte der Retentionszeit neben sich aufweisen, der durch die vor dieser Regel bereits durchlaufenen aktivierten Regeln noch nicht invalidiert wurde. Die chromatographischen Peaks von einigen Substanzen weisen dahingehend Besonderheiten auf, dass bestimmte Peaks entweder vor oder nach sich immer einen ganz bestimmten Nachbar-Peak in bestimmten untersuchten Probenmaterialien (Matrices) aufweisen. Falls ein solcher Nachbar-Peak definiert wurde, da für die gesuchte Substanz bekannt ist, dass er bei dem entsprechenden Peak auftritt, und dieser innerhalb gewisser Grenzen nicht auftaucht, dann handelt es sich vermutlich nicht um die gesuchte Substanz, und eine entsprechende Zuweisung des Peaks wäre falsch. Daher ermöglichen diese Regeln eine hohe Genauigkeit für Substanzen, deren Peaks im Chromatogramm solche Peak-Nachbar-Peak-Beziehungen aufweisen.

Dann überprüft die Validierungseinrichtung anhand von Regel P19a die von den beiden Auswertungseinrichtungen A, B derselben Substanz zugewiesenen Peaks a bzw. b daraufhin, ob ihre Abweichungen in dem Retentionsindex (RI) voneinander innerhalb festgelegter Grenzwerte liegen. Die Peaks einer Substanz liegen nämlich unabhängig vom Verfahren bei einer bestimmten Retentionszeit bzw. innerhalb bestimmter Grenzen um diese Retentionszeit (es kann nur eine richtige absolute Retentionszeit geben, da die Retentionszeiten unabhängig vom nachfolgenden Auswertungsverfahren sind). Es sind lediglich minimale Unterschiede, entstehend durch die unterschiedliche Berechnung des Peakmaximums, zulässig. Die Retentionszeiten hängen für eine Substanz "nur" von den chromatographischen Bedingungen ab.

Die Regel P19a ist analog zur Regel P7a mit dem Unterschied, dass hier anstatt der Retentionszeit der Retentionsindex eingesetzt wird, welcher die Lage eines Peaks in einem Gaschromatogramm angibt und insoweit eine ähnliche Funktion wie ein RT-Wert (genau genommen ein Analogon zur Retentionszeit) hat. Der Retentionsindex ist für jede Substanz charakteristisch und stark abhängig von der verwendeten stationären Phase, aber auch von der Messtemperatur bzw. dem Temperaturprogramm. Er wird ermittelt durch Interpolieren zwischen den Retentionsindizes der beiden der Substanz im Chromatogramm benachbarten, zu diesem Zweck zugesetzten Verbindungen, im allgemeinen Alkane. Diese Stoffe werden der Probe in der Regel vor der Messung zugesetzt (Zeitstandards), z.B. in Form einer homologen Reihe von Alkanen (ggf. solcher Alkane mit ungerader Zahl der Kohlenstoffatome in der Kette). Für diese Bezugsstoffe sind die Retentionsindizes per definitionem (zu 100 * Zahl der C-Atome des Alkans) festgesetzt; beispielsweise: RI (Ethan) = 200, RI (Heptadecan) = 1.700. Der Vorteil in der Verwendung des Retentionsindex liegt in seiner üblicherweise höheren Genauigkeit gegenüber der Retentionszeit. Anstelle einer homologen Reihe von Alkanen mit einer ungeraden Anzahl von Kohlenstoffatomen können auch andere homologe Reihen verwendet werden, wie z.B. gesättigte Fettsäuren mit ungerader Kohlenstoffanzahl oder deren Methylester oder Amide, wenn sie in der Probe nicht selbst als Ziel-Substanzen von analytischem Interesse vorkommen.

An dieser Stelle sei betont, dass die vorliegende Erfindung nicht nur wie beschrieben in der Gas-, sondern auch in der Flüssigchromatographie einsetzbar ist. In der Flüssigchromatographie kann es sinnvoll sein, einen prinzipiell analogen Retentionsindex zu ermitteln und zu nutzen, um durch die Anwendung der entsprechenden Peakregeln die Datenqualität, insbesondere die korrekte Zuweisung von Substanzen zu Peaks, zu verbessern. Der Retentionsindex wird hier von einer Vielzahl von chromatographischen Parametern beeinflußt, wie bspw. auch der Eluentenzusammensetzung. Als Zeitstandards können hier beliebige Substanzen der Probe, vorzugsweise der Probe zugesetzte Substanzen, eingesetzt werden, die nicht in der Probe selbst vorkommen oder keine Zielsubstanzen von Interesse in der Probe darstellen. Den Zeitstandards werden dann geeignete feste RI-Werte zugewiesen, welche zur Interpolation der RIs der Analyten dienen.

Danach stellt die Validierungseinrichtung anhand von Regel P19b sicher, dass, falls die erste Auswertungseinrichtung A derselben Substanz mehrere Peaks a zugewiesen hat, welche durch die vor dieser Regel bereits durchlaufenen aktivierten Regeln noch nicht invalidiert wurden (beispielsweise der Regel P19a gehorchen → sehr eng benachbart sind und ggf. Fehldeconvolutionen darstellen), nur der Peak (a) mit der größten Fläche weiterverarbeitet wird. Trotz der vorhergehenden Überprüfung der Retentionsindizes kann es vorkommen, dass innerhalb der obigen Grenzwerte von der ersten Auswertungseinrichtung A mehr als ein Peak aufgefunden wurde, der z.B. der Regel P19a gehorcht. Durch die Regel P19b wird sichergestellt, dass in einem solchen Fall nur der Peak mit der größten Fläche, d.h. der Peak, der mit größter Wahrscheinlichkeit der gesuchte Peak ist, Grundlage der weiteren Analyse werden kann. (Dies beruht auf der Erkenntnis bzw. Annahme, dass eher die kleineren Peaks Fehldeconvolutionen darstellen und der größte deshalb mit der größeren Wahrscheinlichkeit der richtige Peak ist. Wird in allen Proben stets der größte in Frage kommende Peak genommen, dann wird reproduzierbar immer ein über alle Proben vergleichbarer Peak für eine bestimmte Substanzverwendet.)

Des weiteren überprüft die Validierungseinrichtung mittels Regel P20, dass ein von der ersten oder der zweiten Auswertungseinrichtung A bzw. B aufgefundener und ggf. einer Substanz zugewiesener Peak a bzw. b nicht auf einen nicht vorhandenen oder nicht erfolgreich überprüften internen Standard-Peak (SP) normiert wurde, d.h. dass das quantitative Ergebnis (Intensität eines Peaks) für eine Substanz auf das quantitative Ergebnis eines zur quantitativen Bestimmung üblicherweise zugegebenen internen Standards normiert wurde, der fehlerhaft ist. Es kann vorkommen, dass ein in der Probe vorhandener Standard (vgl. oben) und dessen Peak, nach dem gesucht werden soll, nicht aufgefunden wird, oder dass ein solcher Peak auf Grund der obigen Regeln nicht zur weiteren Verarbeitung freigegeben wurde, d.h. dass er invalidiert wurde. Bezüglich eines solchen Peaks dürfen die übrigen Peaks nicht normiert werden, so dass diese Peaks beim Fehlen des Standard-Peaks oder seiner Invalidierung ebenfalls invalidiert werden.

Anschließend, d.h. nach den Regeln P20 oder P21, stellt die Validierungseinrichtung mittels Regel P22 sicher, dass neben einem von der ersten Auswertungseinrichtung A einer Substanz zugewiesenen Peak a kein validierter unbekannter (d.h. keiner Substanz zugeordneter) Nachbar-Peak innerhalb festgelegter Grenzwerte (insbesondere innerhalb der RI oder RT, bevorzugt RI) vorliegt, dessen Massenspektrum auch eine über einem festgelegten Grenzwert liegende Übereinstimmungsqualität (M2) mit dem Referenzmassenspektrum der dem Peak a zugewiesenen Substanz aufweist. Bei dieser Regel sind die festgelegten Grenzwerte sehr klein, d.h. es wird in unmittelbarer Nachbarschaft des Peaks a geprüft. Durch diese Regel werden von der Validierungseinrichtung Peaks untersucht, die nicht zu Ziel-Substanzen gehören, d.h. unbekannt sind. Solche unbekannten Peaks, die in unmittelbarer Nähe zu einem bisher erfolgreich überprüften Peak derselben Substanz liegen und auch ein ähnliches Massenspektrum aufweisen, werden eliminiert, da der unbekannte Peak schon als Peak der Zielsubstanz existiert. Dadurch wird eine Redundanz vermieden. Hierbei ist gewünscht, dass unbekannte Peaks, die eine gute Übereinstimmungsqualität (= Grenzwert, ist vom Benutzer hinterlegt) der Massenspektren zum benachbarten identifizierten Peak aufweisen, nicht behandelt und deshalb invalidiert werden - "nur" alle anderen sind potentielle neue und somit sehr interessante Substanzen, die keine gute Übereinstimmungsqualität mit bekannten Ziel-Substanzen haben.

Parallel zu Regel P22 überprüft die Validierungseinrichtung in Regel P23, daß neben einem von der zweiten Auswertungseinrichtung B einer Substanz zugewiesener Peak b kein unbekannter Peak (also keiner Substanz zugeordneter, sondern lediglich aus ungezielter Integration des Totalionenstroms (=TIC) hervorgegangener Peak) innerhalb festgelegter Grenzwerte (insbesondere innerhalb der RI oder RT, bevorzugt RI) vorliegt, dessen Massenspektrum auch eine über einem festgelegten Grenzwert liegende Übereinstimmungsqualität (M2) mit dem Referenzmassenspektrum der dem Peak b zugewiesenen Substanz aufweist. Unter TIC versteht der Fachmann den Gesamtionenstrom (Total Ion Current), d.h. die Summe der Intensitäten aller Ionen aufgetragen gegen die Zeit. Bei dieser Regel sind die festgelegten Grenzwerte ebenfalls klein, d.h. es wird in unmittelbarer Nachbarschaft des Peaks (b) geprüft. Durch diese Regel werden von der zweiten Auswertungseinrichtung B Peaks untersucht, die nicht zu Ziel-Substanzen gehören, d.h. unbekannt sind. Solche unbekannten Peaks, die in unmittelbarer Nähe zu einem bisher erfolgreich überprüften Peak derselben Substanz liegen und auch ein ähnliches Massenspektrum aufweisen, werden eliminiert, da der unbekannte Peak schon als Peak der Zielsubstanz existiert. Dadurch wird eine Redundanz vermieden, wenn die Übereinstimmungsqualität der Massenspektren von unbekanntem Peak und Peak b einen hinterlegten Grenzwert überschreitet. Es handelt sich also um eine zur Regel P22 analoge Regel.

Parallel zu den Regeln 22 und 23 prüft die Validierungseinrichtung bei Einsatz der zweiten Auswertungseinrichtung B gemäß den Regeln P24, P25 und P26, ob ein von der zweiten Auswertungseinrichtung B einer Substanz zugewiesener Peak b jeweils oberhalb eines festgelegten Signal/Rauschverhältnisses und je eines substanz- und analysenmethodenabhängigen Signalgrenzwerts für die Nachweisgrenze, die Erfassungsgrenze und die Bestimmungsgrenze des Peaks b liegt. Diese Grenzen müssen von einem Peak erfolgreich erreicht werden, da er ansonsten nur eine ungenügende Qualität aufweist, um einer Substanz sicher zugeordnet und in der abschließenden Analyse der Daten zuverlässig quantitativ ausgewertet zu werden. Hiermit ist eine Überprüfung der Messergebnisse einer Probe auf störende Verunreinigungen, Messfehler und technischen Schwierigkeiten bei der Messung möglich.

Die festgelegten Grenzen der Signal/Rauschverhältnisse und die Blindwerte steigen bei diesen Regeln in der folgenden Reihenfolge an: Nachweisgrenze, Erfassungsgrenze, Bestimmungsgrenze. Somit werden die Regeln zur Nachweisgrenze P24 und Erfassungsgrenze P25 erfolgreich durchlaufen, wenn die Regel P26 zur Bestimmungsgrenze erfolgreich abgeschlossen wurde. Wurde die Regel P26 mit negativem Ergebnis durchlaufen, so kann der Peak einer Substanz nicht zuverlässig quantitativ ausgewertet werden. Wurden auch die Regeln P25 oder sogar P24 mit negativem Ergebnis durchlaufen, so kann der Peak nur noch mit einer geringen Zuverlässigkeit quantitativ ausgewertet werden (P25) bzw. kann sogar die Zuordnung zu einer Substanz unzuverlässig sein (P24), und die übrigen Regeln müssen dann ggf. nicht weiter ausgewertet werden.

Die Validierungseinrichtung gibt nur bei erfolgreicher Überprüfung aller aktivierten Regeln die jeweils erfolgreich überprüften Peaks der deconvolutierten Massenspektren-Signale a bzw. von integrierten Ionen b zur weiteren Analyse frei.

Durch das vorgestellte Verfahren werden somit die Zahl der zu analysierenden Peaks eines Chromatogramms bzw. Massenspektrums ggf. automatisch verringert, da ungültige Peaks, die vom erfindungsgemäßen Verfahren für die weitere Verarbeitung gesperrt bzw. nicht freigegeben wurden, als solche gekennzeichnet werden. Somit wird die Analyse komplexer Mischungen vereinfacht, beschleunigt und verbessert.

Das erfindungsgemäße Verfahren und System kann auch in ein Laborinformationsverwaltungssystem (LIMS) eingebunden sein, so dass eine Überprüfung der Probenverfolgungsdaten, wie Frischgewicht, Messmethoden und Serienzusammengehörigkeit möglich wird. So kann zum Beispiel parallel zu den erläuterten Regeln überprüft werden, ob eine Probe, die vor der Analyse fraktioniert wurde, Peaks in als fehlend oder als Falschmessungen markierten Fraktionen, bspw. in einer vorgelagerten Qualitätskontrolle der Meßdaten als falsch gefundene und markierte Fraktionen, aufweist. Dies darf natürlich nicht sein, und deshalb müssen solche Peaks von der weiteren Analyse ausgenommen werden (Regel S2).

Andererseits müssen als vorhanden gekennzeichnete Fraktionen mindestens einen Peak in ihren Spektren aufweisen (Regel CP1). Werden demnach zu einer vorhandenen Fraktion keine Peaks aufgefunden, so kann gegebenenfalls eine Warnmeldung den Benutzer auf eventuelle Probleme hinweisen.

Ferner können Proben, die kein Frischgewicht aufweisen (z.B. Fehler bei Ermittlung des Frischgewichtes), keine gültigen Peaks produzieren (Regel S3). Tritt ein solcher Zustand auf, müssen alle Peaks der Probe für die weitere Verarbeitung gesperrt werden.

Durch diese Einbettung der Überprüfung der spektroskopischen Daten in ein Laborinformationssystem ist eine ganzheitliche Überprüfung und Probenverfolgung trotz großen Probenaufkommens, wie es heutzutage bei der High-Throughput-Analyse vorkommt, zu bewältigen.

Die Figuren 2 bis 7 veranschaulichen die Anwendung der Regeln P8 und P20 durch die Validierungseinrichtung auf Peaks b, die von der zweiten Auswertungseinrichtung B einem internen Standard bzw. einer Substanz X zugewiesen wurden.

Figur 2 zeigt die Auftragung des Retentionsindex der Peaks einer Substanz in unterschiedlichen Proben gegen die Kennziffer der Proben, wobei es sich bei der Substanz um einen internen Standard (ISTD) handelt und die Peaks durch die zweite Auswertungseinrichtung B dem Standard zugewiesen wurden. Wie man erkennt, weicht der Retentionsindex des Peaks des internen Standards in einer Probe (31232110.D) stark von denen der übrigen ab, d.h. er liegt nicht im (vorgegebenen) erwarteten Bereich. Daher eignet sich dieser Peak in der entsprechenden Probe nicht als interner Standard, da offensichtlich bei der Messung ein Fehler aufgetreten ist. Solche Fehler können durch die Invalidierung des entsprechenden Peaks durch die aktivierte Regel P8 von der Validierungseinrichtung korrigiert werden. Wie oben erwähnt, bewirkt die Regel P8, dass Peaks einer Substanz, die nicht im erwarteten Retentionsindex-Bereich auftreten, invalidiert werden.

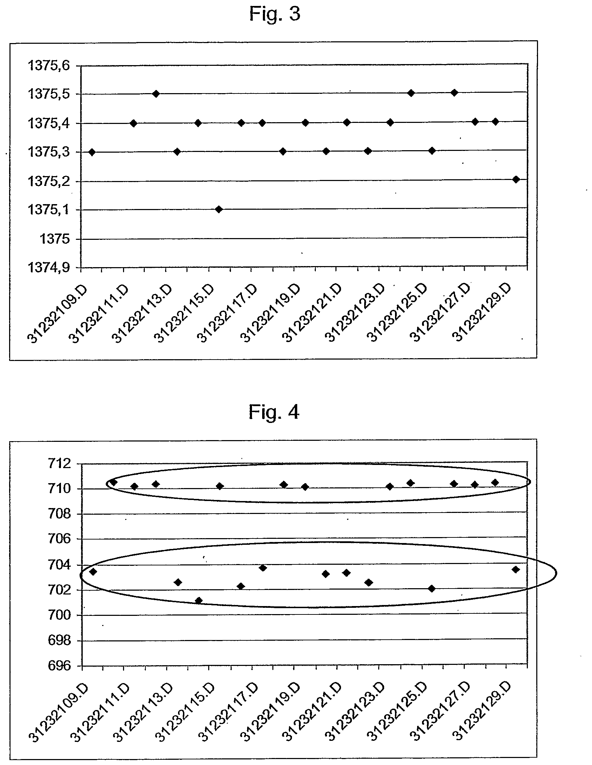

Figur 3 zeigt das Ergebnis der Anwendung der Regel P8 durch die Validierungseinrichtung auf die in Figur 2 gezeigten Proben. Der stark abweichende Peak des internen Standards in der fraglichen Probe ist nun invalidiert, d.h. er wird nicht mehr bei der weiteren Verarbeitung berücksichtigt. Um dies zu kennzeichnen, ist der Datenpunkt bzw. Peak (umkreist in Figur 2) aus der Grafik (Figur 3) entfernt. Um die Darstellung zu verbessern ist der Maßstab der Grafik gegenüber Figur 2 verändert.

Figur 4 zeigt eine entsprechende Ansicht der einer Substanz X von der zweiten Auswertungseinrichtung B zugewiesenen Retentionsindizes in mehreren Proben, wobei es sich um dieselben Proben wie in den Figuren 2 und 3 handelt, mit dem Unterschied, dass nicht der interne Standard, sondern die Substanz X untersucht wird.

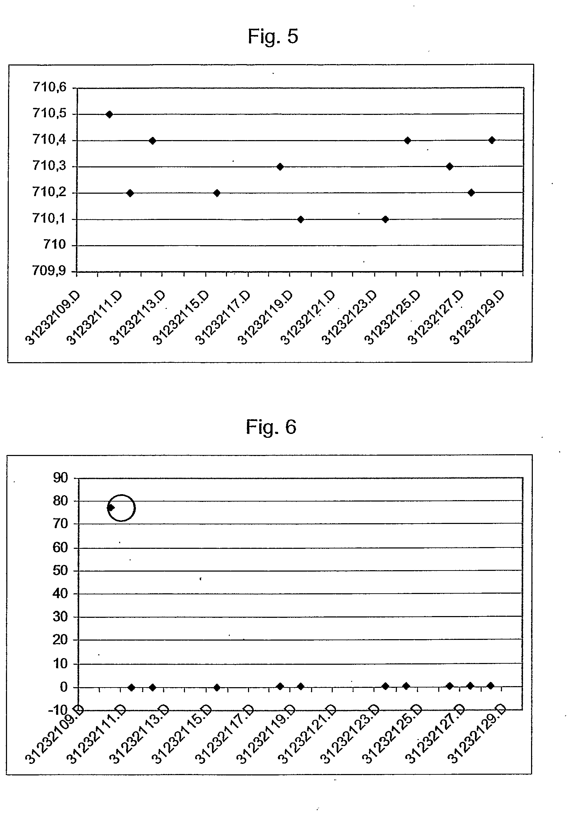

Man erkennt deutlich, dass es zwei Gruppen von Retentionsindizes gibt. Eine Gruppe der Indizes liegt um 710 herum, während die zweite Gruppe mit etwas breiterer Steuerung um den Wert 703 herum angeordnet ist. Es ist daher wahrscheinlich, dass es sich nicht um eine einzige Substanz X, sondern um zwei verschiedene Substanzen handelt. Ein solches Auftreten zweier Gruppen von Retentionsindizes der einer Substanz zugewiesenen Peaks in unterschiedlichen Proben kann zum Beispiel vorkommen, wenn fehlerhafte Zuweisungen von Peaks zu der Substanz aufgrund zu geringer Konzentration der Substanz in der Probe durch die zweite Auswertungseinrichtung B vorgenommen werden. Daher ist es in diesem Fall auch sinnvoll, dass die Validierungseinrichtung durch Ausführung der Regel P8 eine der Gruppen von Retentionsindizes von der weiteren Verarbeitung ausnimmt. Im vorliegenden Fall werden die Peaks, deren Retentionsindex außerhalb des Bereiches von 709,9 bis 710,9 liegen, invalidiert. Figur 5 zeigt die Grafik (in angepasstem Maßstab) nach Anwendung der Regel P8 und der Entfernung von invalidierten Peaks. Diese Peaks der zweiten Gruppe sind nunmehr für die'Substanz X von der weiteren Verarbeitung (Analyse bzw. Auswertung) ausgenommen.

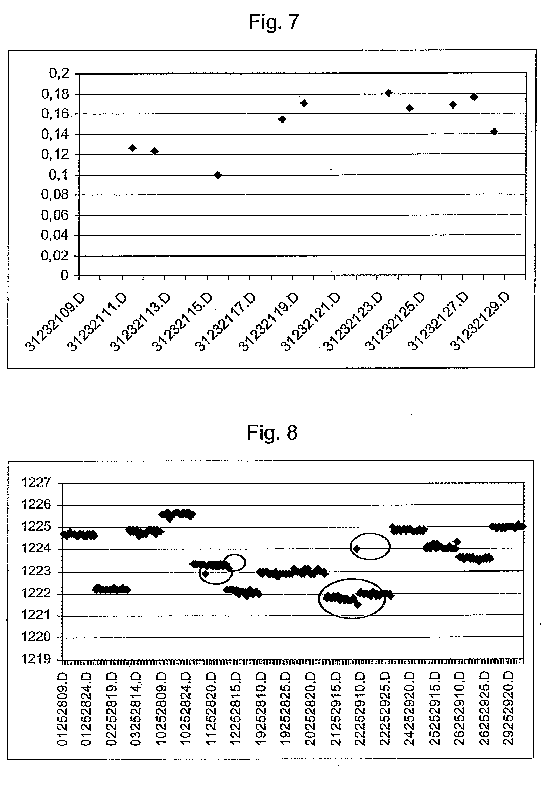

In Figur 6 ist anstelle der Retentionsindizes die relative normierte Fläche (Intensität normiert auf den internen Standard) der der Substanz X zugewiesenen Peaks in den unterschiedlichen Proben aufgetragen. Man erkennt, dass trotz Anwendung der Regel P8 durch die Validierungseinrichtung immer noch starke Abweichungen in einer Probe bezüglich der relativen Fläche des Peaks vorhanden sind. Es ist daher wahrscheinlich, dass dieser Wert fehlerhaft ist. Bei der Probe handelt es sich um die bereits in Figur 2 auffällige Probe, bei der der interne Standard invalidiert wurde. Daher kann hier die Validierungseinrichtung durch Ausführung der Regel P20 fehlerhaft zugewiesene Peaks von der weiteren Bearbeitung ausnehmen. (Gemäß Regel P20 wird bei Einsatz der ersten und/oder der zweiten Auswertungseinrichtung A bzw. B überprüft, dass ein von der ersten oder der zweiten Auswertungseinrichtung A, B einer Substanz zugewiesener Peak a bzw. b nicht auf einen nicht vorhandenen oder einen nicht erfolgreich durch vorher durchlaufene und aktivierte Regeln überprüften Standard-Peak (SP) normiert wurde.) Wie aus Figur 7 hervorgeht, wird bewirkt, dass der entsprechende Peak in der fraglichen Probe invalidiert wird. Der Peak der fraglichen Probe ist daher aus der Grafik entfernt, und der Maßstab der Grafik wurde erneut angepasst.

Die Figuren 8 bis 10 veranschaulichen die Anwendung der Regeln S1, S2 und P1 und P20 durch die Validierungseinrichtung auf Peaks, die von der zweiten Auswertungseinrichtung B einer Substanz Y zugewiesen wurden.

In Figur 8 sind die Retentionsindizes der der Substanz Y von der zweiten Auswertungseinrichtung B zugewiesenen Peaks unterschiedlicher Proben aufgetragen. Es gibt mehrere Gruppen von Retentionsindizes der Peaks der Substanz Y. Dies kann z.B. deshalb auftreten, weil unterschiedliche Geräte (GCMS) zur Durchführung der Chromatographie bzw. Aufnahme der Massenspektren eingesetzt wurden. Ein weiterer Grund kann in den Phasen der verwendeten Säulen liegen. Obwohl gleiche Phasen eingesetzt werden, um Abweichungen der Ergebnisse gering zu halten, kann es dennoch vorkommen, dass abweichende Ergebnisse (RI) für ein und dieselbe Substanz auf verschiedenen Säulen erhalten werden. Dies liegt z.B. an der unterschiedlichen Lebensdauer und Abnutzung, Verschmutzung, Phasenmaterialzerstörung (Ausbluten), Temperatur- und/oder Druckschwankungen usw. Solche Effekte und ihre Auswirkungen sind dem Fachmann geläufig.

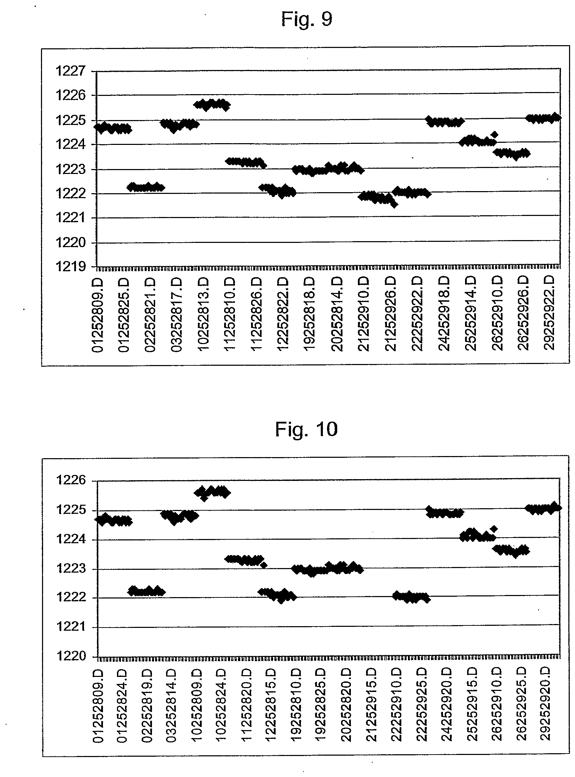

Nach Anwendung der Regel S2 durch die Validierungseinrichtung werden im LIMS als fehlerhaft markierte Proben invalidiert, d.h. solche Proben, bei denen während der Probenvorbereitung oder Messung ein Fehler unterlaufen ist, der bemerkt und im LIMS registriert wurde (also solche, die keine Peaks produzieren dürfen, jedoch trotzdem in die Messung und in die Validierungseinrichtung gelangten), werden invalidiert. Wie in Figur 9 dargestellt, wurden daraufhin mehrere Proben (umkreist in Figur 8) invalidiert. Bei den heute eingesetzten Hochdurchsatzmethoden in der biologischen Forschung, bei denen mehrere 1.000 Proben pro Tag bearbeitet bzw. analysiert werden müssen, können solche Fehler tatsächlich vorkommen, und falls sie nicht entdeckt werden, bewirken diese Fehler später häufig schwer zu entdeckende und zu behebende Folgefehler bei der Analyse. Die ggf. automatische Invalidierung solcher fehlerhafter Proben zu einem frühen Zeitpunkt ist daher von großem Vorteil bei der HTP-Analyse.

Wird von der Validierungseinrichtung V auf die in Figur 8 dargestellten Gruppen von Peaks die Regel S1 angewendet, d.h. Proben, bei denen mindestens ein Zeitstandard nicht aufgefunden oder nicht erfolgreich vorher durch die Regel P1 überprüft wurde, werden invalidiert, so erhält man die in Figur 10 dargestellte Auftragung. Neben einer vollständigen Gruppe von Peaks bzw. Proben (umkreist in Figur 8) wurden auch weitere einzelne Peaks (bzw. Proben) invalidiert, welche zumindest teilweise auch schon parallel (unabhängig) durch die Regel S2 invalidiert werden würden. Proben, bei denen die (obligatorischen) Zeitstandards nicht aufgefunden werden, besitzen nur schlechte Möglichkeiten zur Normierung bzw. Festlegung der Retentionsindizes usw., so dass es durchaus sinnvoll ist, diese als fehlerhaft zu markieren und daher zu invalidieren. So können sie ggf. nach Überprüfung erneut vermessen werden.

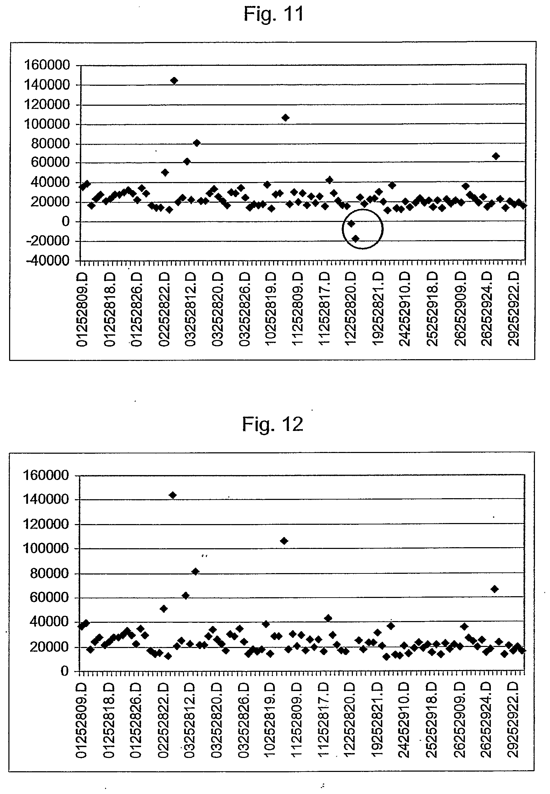

Die Figuren 11 und 12 veranschaulichen die Anwendung der Regel P21 durch die Validierungseinrichtung auf Peaks, die von der zweiten Auswertungseinrichtung B einer Substanz Z zugewiesen wurden.

In Figur 11 ist die absolute Fläche der der Substanz Z zugewiesenen Peaks der unterschiedlichen Proben aufgetragen. In dem dargestellten Beispiel ist die Fläche zweier Peaks (umkreist) nahe an Null bzw. möglicherweise negativ. Eine negative Fläche kann definitionsgemäß nicht auftreten, und solche Signale bzw. Peaks müssen daher von der weiteren Auswertung ausgenommen werden. Dies kann die Validierungseinrichtung anhand der Regel P21 überprüfen und durch sie Peaks mit negativen Flächen invalidieren. Wie in Figur 12 ersichtlich ist, besaßen beide der in Frage kommenden Peaks aus Figur 11 eine negative Fläche und wurden daher durch die Validierungseinrichtung trotz Zuweisung durch die zweite Auswertungseinrichtung B invalidiert.

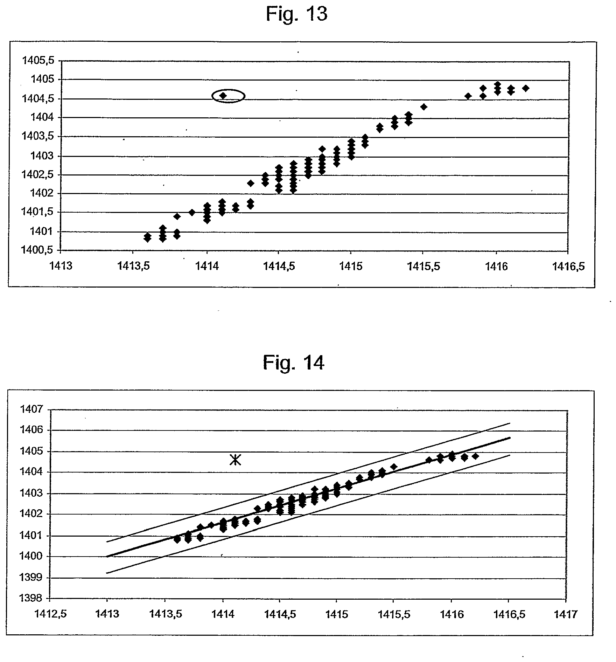

Figuren 13 und 14 zeigen die Überprüfung einer Substanz W mittels der linearen Modellierung. Aufgetragen ist der Retentionsindex der der Substanz W zugewiesenen Peaks gegen den Retentionsindex der Peaks des Standards für die lineare Modellierung. Die Validierungseinrichtung überprüft, wie oben erläutert, anhand von Regel P9a/b (bzw. Regel P16a/b), ob der Linearmodell-Retentionsindex (LM-RI) und der Retentionsindex (RI) eines von einer der beiden Auswertungseinrichtungen B bzw. A einer Substanz zugewiesenen Peaks b bzw. a innerhalb festgelegter Abweichungen auf oder an einer Gerade, d.h. innerhalb eines Korridors um eine Gerade, liegen.

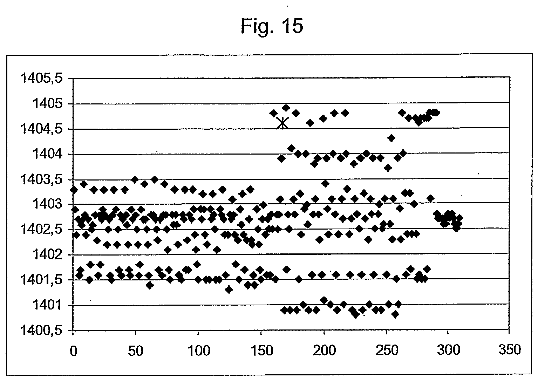

Durch die Auftragung ergibt sich angenähert eine Gerade, wobei im dargestellten Fall nur geringe Abweichungen von der linearen Modellierung im gesamten Retentionsindexbereich der Substanz im Vergleich zur Streuung auftreten, wie dies aus Figur 14 deutlich wird, in der die Regressionsgerade und die Grenzwerte (Delta_oben/unten) eingezeichnet sind. Im Vergleich dazu ist die Streuung bei "normaler" Auftragung (vgl. Figur 15: RI gegen Messungen) so groß, dass eine sichere Zuordnung der Peaks zur Substanz W nicht möglich ist. Der in den Figuren 13 bis 15 markierte Datenpunkt bzw. Peak (umkreist bzw. Stern) wäre mit üblichen Methoden oder üblicher Herangehensweise (Figur 15) nicht aus der Auswertung entfernbar. Der fragliche Datenpunkt liegt erkennbar inmitten der anderen gültigen Punkte und kann daher nicht ohne weiteres zur Invalidierung ausgewählt werden.

Die lineare Modellierung ist insbesondere bei eng benachbart liegenden Peaks von Substanzen, wie dies z.B. bei Isomeren mit einem RI-Unterschied von weniger als 3 auftritt, sehr geeignet, die Identität der zugewiesenen Peaks zu bestimmen, obwohl dies anhand der absoluten Retentionsindizes nicht durchführbar wäre.

**Patentansprüche**

1. Verfahren zur Analyse einer mehrere Substanzen beinhaltenden Probe, mit den folgenden Schritten:

- Aufnehmen von Massenspektren (Massenspektren-Daten D) der aus einem vorgeschalteten Chromatographen erhaltenen Probe (P) in einer Messeinrichtung (M),
- Zuweisen von chromatographischen Peaks (a) und (b) und ihrer zugehörigen Massenspektren zu jeweils einer der Substanzen, wobei die Zuweisung in einer ersten Auswertungseinrichtung (A) und/oder einer zweiten Auswertungseinrichtung (B) er- folgt, wobei die erste Auswertungseinrichtung (A) mindestens eine Vergleichseinrichtung zum Vergleich von deconvolutierten Massenspektren mit gespeicherten Referenzspektren aufweist und die zweite Auswertungseinrichtung (B) mindestens eine Vergleichseinrichtung zum Vergleich von Massenspektren der chromatographischen Peaks der Ionen mit gespeicherten Referenzspektren aufweist,
- wobei der Schritt des Zuweisens in der ersten Auswertungseinrichtung (A) das Deconvolutieren der von der Messeinrichtung (M) erhaltenen Massenspektren und das Zuweisen der chromatographischen Peaks (a) und ihrer zugehörigen deconvolutierten Massenspektren zu jeweils einer der Substanzen aufgrund der Übereinstimmung mit einem Referenzspektrum der Substanz umfasst, und
- wobei der Schritt des Zuweisens in der zweiten Auswertungseinrichtung (B) das Ermitteln der Intensität der von der Messeinrichtung erhaltenen Peaks der Ionen der Massenspektren unter Vorgabe von für die Substanz spezifischen Ionen und deren Retentionszeitbereich und das Zuweisen der chromatographischen Peaks (b) der Ionen und ihrer zugehörigen Massenspektren jeweils zu einer der Substanzen aufgrund der Übereinstimmung von selektiven Ionen und deren Retentionszeitbereichen der Peaks (b) mit den für eine Substanz vorgegebenen Referenzwerten umfasst,
und
- Überprüfen der erfolgten Zuweisungen der ersten und/oder der zweiten Auswerteeinrichtung (A, B) in einer Validierungseinrichtung (V) zumindest anhand von peakorientierten Regeln,

wobei in der Validierungseinrichtung bei Einsatz der ersten und/oder der zweiten Auswertungseinrichtung (A, B) überprüft wird,

- ob der Retentionsindex (RI) eines von der Auswertungseinrichtung (A, B) einer Substanz zugewiesenen Peaks (a bzw. b) innerhalb festgelegter Grenzwerte liegt (Regeln Pl5, PB) und
- dass ein von der ersten und/oder der zweiten Auswertungseinrichtung (A, B) aufgefundener und ggf. einer Substanz zugewiesener Peak (a bzw. b) nicht auf einen nicht vorhandenen oder einen nicht erfolgreich durch vorher durchlaufene und aktivierte Regeln überprüften Standard-Peak (SP) normiert wurde (Regel P20),

nur die jeweils durch aktivierte Regeln erfolgreich überprüften Peaks der ausgewerteten bzw. deconvolutierten Massenspektren-Signale zur weiteren Auswertung freigegeben werden,
und wobei parallel überprüft wird, ob eine Probe, die vor der Analyse fraktioniert wurde, Peaks in als fehlend oder als Falschmessungen markierten Fraktionen aufweist, und Ausnehmen solcher Peaks von der weiteren Analyse (Regel S2)
und Ausgeben einer Warnmeldung, wenn zu einer vorhandenen Fraktion keine Peaks aufgefunden werden (Regel CP1).

2. Verfahren nach Anspruch 1, bei dem zumindest die erste Auswertungseinrichtung (A) vorgesehen ist.

3. Verfahren nach Anspruch 1, bei dem zumindest die zweite Auswertungseinrichtung (B) vorgesehen ist.

4. Verfahren nach Anspruch 1, bei dem die erste und die zweite Auswertungseinrichtung (A, B) vorgesehen sind.

5. Verfahren nach Anspruch 4, in dem in der Validierungseinrichtung (V) die von den beiden Auswertungseinrichtungen (A und B) derselben Substanz zugewiesenen Peaks (a bzw. b) daraufhin überprüft werden, ob ihre Abweichungen in der Retentionszeit (RT) voneinander innerhalb festgelegter Grenzwerte liegen (Regel P7a).

6. Verfahren nach Anspruch 4 oder 5, in dem in der Validierungseinrichtung (V) bei Einsatz der Auswertungseinrichtung (A und B) die von beiden Auswertungseinrichtungen (A und B) derselben Substanz zugewiesenen Peaks (a bzw. b) daraufhin überprüft werden, ob ihre Abweichungen in dem Retentionsindex (RI) voneinander innerhalb festgelegter Grenzwerte liegen (Regel P19a).

7. Verfahren nach einem der Ansprüche 2 oder 4 bis 6, in dem in der Validierungseinrichtung (V) bei Einsatz der ersten Auswertungseinrichtung (A) überprüft wird, ob die Retentionszeiten der von der ersten Auswertungseinrichtung (A) Substanzen zuge- wiesenen Peaks (a) innerhalb festgelegter Grenzen liegen (Regel P4).

8. Verfahren nach einem der Ansprüche 3 bis 6, in dem in der Validierungseinrichtung (V) bei Einsatz der zweiten Auswertungseinrichtung (B) überprüft wird, ob die Retentionszeiten der von der zweiten Auswertungseinrichtung (B) Substanzen zugewiesenen Peaks (b) innerhalb festgelegter Grenzen liegen(Regel Pl).

9. Verfahren nach einem der Ansprüche 2 oder 4 bis 7, in dem in der Validierungseinrichtung (V) bei Einsatz der ersten Auswertungseinrichtung (A) überprüft wird, ob die Übereinstimmungsqualitäten (M1) der von der ersten Auswertungseinrichtung (A) einer Substanz zugewiesenen Peaks (a) oberhalb festgelegter Grenzwerte liegen (Regel P13a).

10. Verfahren nach einem der vorhergehenden Ansprüche, in dem in der Validierungseinrichtung (V) bei Ein- satz der ersten und/oder der zweiten Auswertungseinrichtung (A, B) überprüft wird, ob die Übereinstimmungsqualitäten (M2) der von der bzw. den Auswertungseinrichtungen (A und/oder B) einer Substanz zugewiesenen Peaks (a bzw. b) oberhalb festgelegter Grenzwerte liegen (Regel P13b).

11. Verfahren nach einem der Ansprüche 2, 4, 5, 7 oder 9, in dem in der Validierungseinrichtung (V) für den Fall, dass die erste Auswertungseinrichtung (A) derselben Substanz mehrere Peaks (a) zugewie- sen hat, welche durch die vor dieser Regel bereits durchlaufenen aktivierten Regeln noch nicht invalidiert wurden, nur der Peak (a) mit der größ- ten Fläche weiterverarbeitet wird (Regel P7b).

12. Verfahren nach Anspruch 3, 4 oder 8, in dem in der Validierungseinrichtung (V) bei Einsatz der zwei- ten Auswertungseinrichtung (B) überprüft wird, ob die zu einer Probe (P) festgelegten Peaks für Zeitstandards von der zweiten Auswertungseinrich- tung (B) aufgefunden und durch die vor dieser Re- gel bereits durchlaufenen aktivierten Regeln noch nicht invalidiert wurden (Regel S1).

13. Verfahren nach einem der Ansprüche 2, 4 bis 7, 9 oder 11, in dem in der Validierungseinrichtung (V) bei Einsatz der ersten Auswertungseinrichtung (A) überprüft wird, ob der Retentionsindex des Standards für die lineare Modellierung (LM-RI) und der Retentionsindex (RI) eines von der ersten Auswertungseinrichtung (A) einer Substanz zugewiesenen Peaks (a) bei Auftragung gegeneinander innerhalb festgelegter Abweichungen an oder auf einer Gerade liegen (Regel P16a/b (LIN_MOD)).

14. Verfahren nach Anspruch 13, in dem der Standard ein besonderer Standard für die lineare Modellierung und/oder eine beliebige Substanz ist.

15. Verfahren nach einem der Ansprüche 3 bis 6, 8 oder 12, in dem in der Validierungseinrichtung (V) bei Einsatz der zweiten Auswertungseinrichtung (B) überprüft wird, ob der Retentionsindex des Stan- dards für die lineare Modellierung (LM-RI) und der Retentionsindex (RI) eines von der zweiten Auswer- tungseinrichtung (B) einer Substanz zugewiesenen Peaks (b) bei Auftragung gegeneinander innerhalb festgelegter Abweichungen an oder auf einer Gerade liegen (Regel P9a/b (LIN_MOD)).

16. Verfahren nach Anspruch 15, in dem der Standard ein besonderer Standard für die lineare Modellierung und/oder eine beliebige Substanz ist.

17. Verfahren nach einem der Ansprüche 2, 4 bis 7, 9, 11, 13 oder 14, in dem in der Validierungseinrichtung (V) die von der ersten Auswertungseinrichtung (A) Substanzen zugewiesenen Peaks (a) daraufhin überprüft werden, ob diese einen festgelegten Nachbar-Peak, der durch die vor dieser Regel bereits durchlaufenen aktivierten Regeln noch nicht invalidiert wurde, zwischen festgelegten Minimal- und Maximalwerten der Retentionszeit auf einer festgelegten Seite neben sich aufweisen (Regel P18a/b).

18. Verfahren nach einem der Ansprüche 3, 4 bis 6, 8, 9, 12, 15 oder 16, in dem in der Validierungseinrichtung (V) die von der zweiten Auswertungseinrichtung (B) Substanzen zugewiesenen Peaks (b) da-raufhin überprüft werden, ob diese einen festgelegten Nachbar-Peak, der durch die vor dieser Regel bereits durchlaufenen aktivierten Regeln noch nicht invalidiert wurde, zwischen festgelegten Minimal- und Maximalwerten der Retentionszeit auf einer festgelegten Seite neben sich aufweisen (Regel P11a/b).

19. Verfahren nach einem der Ansprüche 2, 4 bis 7, 9, 11, 13, 14 oder 17, in dem in der Validierungseinrichtung (V) für den Fall, dass die erste Auswertungseinrichtung (A) derselben Substanz mehrere Peaks (a) zugewiesen hat, welche durch die vor dieser Regel bereits durchlaufenen aktivierten Re- geln noch nicht invalidiert wurden, nur der Peak(a) mit der größten Fläche weiterverarbeitet wird (Regel P19b).

20. Verfahren nach einem der Ansprüche 3, 4 bis 6, 8, 9, 12, 15, 16 oder 18, in dem in der Validierungseinrichtung (V) bei Einsatz der zweiten Auswertungseinrichtung (B) überprüft wird, ob die von der zweiten Auswertungseinrichtung (B) einer Substanz zugewiesenen Peaks (b) keine negativen Flächen aufweisen (Regel P21).

21. Verfahren nach einem der Ansprüche 2, 4 bis 7, 9, 11, 13, 14, 17 oder 19, in dem in der Validierungseinrichtung (V) bei Einsatz der ersten Auswertungseinrichtung (A) überprüft wird, dass ein von der ersten Auswertungseinrichtung (A) keiner Substanz zugewiesener, also unbekannter Peak (a) keinen validierten bekannten Nachbar-Peak inner- halb festgelegter Grenzwerte aufweist, dessen Referenzspektrum auch eine über einem festgelegten Grenzwert liegende Übereinstimmungsqualität mit dem Massenspektrum des unbekannten Peaks {a) auf- weist (Regel P22).

22. Verfahren nach einem der Ansprüche 3, 4 bis 6, 8, 9, 12, 15, 16, 18 oder 20, in dem in der Validierungseinrichtung (V) bei Einsatz der zweiten Auswertungseinrichtung (B) überprüft wird, dass ein von der zweiten Auswertungseinrichtung (B) keiner Substanz zugewiesener TIC-Peak (b) keinen validierten bekannten Nachbar-Peak innerhalb festgelegter Grenzwerte aufweist, dessen Referenzspekt- rum auch eine über einem festgelegten Grenzwert liegende Übereinstimmungsqualität mit dem Massenspektrum des unbekannten TIC-Peaks (b) aufweist (Regel P23) .

23. Verfahren nach einem der Ansprüche 3, 4 bis 6, 8, 9, 12, 15, 16, 18, 20 oder 22, in dem in der Validierungseinrichtung (V) bei Einsatz der zweiten Auswertungseinrichtung (B) überprüft wird, daß ein von der zweiten Auswertungseinrichtung (B) einer Substanz zugewiesener Peak (b) oberhalb eines festgelegten Signal/Rauschverhältnisses und eines Signalintensitätswerts für die Nachweisgrenze der Substanz liegt (Regel P24).

24. Verfahren nach einem der Ansprüche 3, 4 bis 6, 8, 9, 12, 15, 16, 18, 20, 22 oder 23, in dem in der Validierungseinrichtung (V) bei Einsatz der zwei- ten Auswertungseinrichtung (B) überprüft wird, daß ein von der zweiten Auswertungseinrichtung (B) ei- ner Substanz zugewiesener Peak (b) oberhalb eines festgelegten Signal/Rauschverhältnisses und eines Signalintensitätswerts für die Erfassungsgrenze der Substanz liegt (Regel P25).

25. Verfahren nach einem der Ansprüche 3, 4 bis 6, 8, 9, 12, 15, 16, 18, 20 oder 22 bis 24, in dem in der Validierungseinrichtung (V) bei Einsatz der zweiten Auswertungseinrichtung (B) überprüft wird, daß ein von der zweiten Auswertungseinrichtung (B) einer Substanz zugewiesener Peak (b) oberhalb ei- nes festgelegten Signal/Rauschverhältnisses und eines Signalintensitätswerts für die Bestimmungs- grenze der Substanz liegt (Regel P26).

26. Verfahren nach einem der Ansprüche 23 bis 25, in dem die festgelegten Signal/Rauschverhältnisse und die Signalintensitätswerte in der Reihenfolge: Nachweisgrenze, Erfassungsgrenze, Bestimmungsgren- ze ansteigen und entsprechend der ei- nem Peak zugewiesenen Substanz unterschiedlich sein können.

27. Massenspektrenanalysesystem zur Analyse einer mehrere Substanzen beinhaltenden Probe mit

- einer Messeinrichtung (M) zur Aufnahme von Massenspektren der aus einem vorgeschalteten Chromatographen erhaltenen Probe (P),
- einer ersten Auswertungseinrichtung (A) zur Deconvolution der von der Messeinrichtung (M) erhaltenen Massenspektren mit mindestens einer Vergleichseinrichtung zum Vergleich der deconvolutierten Massenspektren mit gespeicherten Referenzspektren und/oder einer zweiten Auswertungseinrichtung (B) zur Intensitätsermittlung der von der Messeinrichtung M) erhaltenen Peaks der Ionen der Massenspektren, unter Vorgabe von für die Substanz spezifischen Ionen und deren Retentionszeitbereich, wobei die zweite Auswertungseinrichtung (B) mindestens eine Vergleichseinrichtung zum Vergleich der Massenspektren der chromatographischen Peaks der Ionen mit gespeicherten Referenzspektren aufweist,
wobei
- die erste Auswertungseinheit (A) dazu angepasst ist, eine Zuweisung von chromatographischen Peaks (a) und ihrer zugehörigen deconvolutierten Massenspektren zu jeweils einer der Substanzen aufgrund der Übereinstimmung mit einem Referenzspektrum der Substanz auszuführen und
- die zweite Auswertungseinheit (B) dazu angepasst ist, eine Zuweisung von chromatographischen Peaks (b) der Ionen und ihrer zugehörigen Massenspektren jeweils zu einer der Substanzen auf- grund der Übereinstimmung von selektiven Io- nen und deren Retentionszeitbereichen der Peaks (b) mit den für eine Substanz vorgege- benen Referenzwerten auszuführen, und mit
- einer Validierungseinrichtung (V) zur Überprüfung der erfolgten Zuweisungen der ersten und/oder der zweiten Auswerteeinrichtung (A, B) zumindest anhand von peakorientierten Regeln

wobei die Validierungseinrichtung dazu angepasst ist, bei Einsatz der ersten und/oder der zweiten Auswertungseinrichtung (A, B) eine Überprüfung auszuführen,

- ob der Retentionsindex (RI) eines von der Auswertungseinrichtung (A, B) einer Substanz zugewiesenen Peaks (a bzw. b) innerhalb festgelegter Grenzwerte liegt (Regeln P15, P8) und
- dass ein von der ersten und/oder der zweiten Auswertungseinrichtung (A, B) aufgefundener und ggf. einer Substanz zugewiesener Peak (a bzw. b) nicht auf einen nicht vorhandenen oder einen nicht erfolgreich durch vorher durchlaufene und aktivierte Regeln überprüften Standard-Peak (SP) normiert wurde (Regel P20),

und nur die jeweils durch aktivierte Regeln erfolgreich überprüften Peaks der ausgewerteten bzw. deconvolutierten Massenspektren-Signale zur weiteren Auswertung freizugeben, und wobei die Validierungseinrichtung dazu angepasst ist, parallel eine Überprüfung auszuführen, ob eine Probe, die vor der Analyse fraktioniert wur- de, Peaks in als fehlend oder als Falschmessungen markierten Fraktionen aufweist, und solcher Peaks von der weiteren Analyse (Regel S2) auszunehmen und eine Warnmeldung auszugeben, wenn zu einer vorhandenen Fraktion keine Peaks aufgefunden werden (Regel CP1).

28. Massenspektrenanalysesystem nach Anspruch 27, das als erste und/oder zweite Auswertungseinrichtung (A bzw. B) mindestens eine programmtechnisch ein- gerichtete Datenverarbeitungsanlage umfasst.

29. Laborinformationsverwaltungssystem (LIMS) mit einem Massenspektrenanalysesystem nach Anspruch 27 oder 28.

30. Verwendung eines Verfahrens nach einem der Ansprü- che 1 bis 26, eines Massenspektrenanalysesystems nach Anspruch 27 oder 28, oder eines Laborinformationsverwaltungssystems nach Anspruch 29 zur Analyse von einer mehrere Substanzen beinhaltenden Probe.

**31.** Verwendung nach Anspruch 30, bei der die zu analysierende Probe ein Pflanzenextrakt ist.

## Claims

**1.** A method for analyzing a sample containing a plurality of substances, having the following steps:

- receiving mass spectra (mass spectra data D) of the sample (P) obtained from an upstream chromatograph in a measurement device (M),
- assigning chromatograph peaks (a) and (b) and their corresponding mass spectra to one of the substances in each case, wherein the assignment is made in a first evaluation device (A) and/or a second evaluation device (B), wherein the first evaluation device (A) has at least one comparison device for comparing deconvoluted mass spectra with stored reference spectra and the second evaluation device (B) has at least one comparison device for comparing mass spectra of the chromatographic peaks of the ions with stored reference spectra,
- wherein the step of assigning in the first evaluation device (A) comprises the deconvoluting of the mass spectra obtained from the measurement device (M) and the assigning of the chromatographic peaks (a) and their corresponding deconvoluted mass spectra to one of the substances in each case on the basis of the match with a reference spectrum of the substance, and
- wherein the step of assigning in the second evaluation device (B) comprises the ascertaining of the intensity of the peaks of the ions of the mass spectra obtained from the measurement device with specification of ions specific to the substance and their retention time range, and the assigning of the chromatographic peaks (b) of the ions and their corresponding mass spectra to one of the substances in each case on the basis of the match of selective ions and their retention time ranges of the peaks (b) with the reference values fixed for a substance, and
- verifying the assignments made in the first and/or second evaluation device (A, B) in a validation device (V) at least using peak-oriented rules,

wherein the validation device, when the first and/or second evaluation unit (A, B) is used, verifies

- whether the retention index (RI) of a peak (a or b) assigned to a substance by the evaluation device (A, B) is within defined limits (rules P15, PB) and
- that a peak (a or b) found by the first and/or second evaluation device (A, B) and optionally assigned to a substance has not been standardized to a standard peak (SP) that is absent or has not been successfully verified by rules implemented and activated beforehand (rule P20),

only the peaks of the evaluated or deconvoluted mass spectra signals that have each been successfully verified by activated rules are approved for further evaluation,
and wherein it is verified in parallel whether a sample that has been fractionated prior to the analysis has peaks in fractions marked as absent or as incorrect measurements, and excluding such peaks from further analysis (rule S2),
and issuing a warning message if no peaks are found for a fraction present (rule CP1).

**2.** The method according to claim 1, in which at least the first evaluation device (A) is provided.

**3.** The method according to claim 1, in which at least the second evaluation device (B) is provided.

**4.** The method according to claim 1, in which the first and second evaluation device (A, B) are provided.

**5.** The method according to claim 4, in which the validation device (V) verifies the peaks (a or b) assigned to the same substance by the two evaluation devices (A and B) as to whether their variances in retention time (RT) from one another are within defined limits (rule P7a).

**6.** The method according to claim 4 or 5, in which, when the evaluation device (A and B) is used, the validation device (V) verifies the peaks (a or b) assigned to the same substance by the two evaluation devices (A and B) as to whether their variances in retention index (RI) from one another are within defined limits (rule P19a).

**7.** The method according to any of claims 2 and 4 to 6, in which, when the first evaluation device (A) is used, the validation device (V) verifies whether the retention times of the peaks (a) assigned to substances by the first evaluation unit (A) are within defined limits (rule P4).

**8.** The method according to any of claims 3 to 6, in which, when the second evaluation device (B) is used, the validation device (V) verifies whether the retention times of the peaks (b) assigned to substances by the second evaluation unit (B) are within defined limits (rule P1).

**9.** The method according to any of claims 2 and 4 to 7, in which, when the first evaluation device (A) is used, the validation device (V) verifies whether the match qualities (M1) of the peaks (a) assigned to substances by the first evaluation unit (A) are above defined limits (rule P13a).

10. The method according to any of the preceding claims, in which, when the first and/or second evaluation device (A, B) is used, the validation device (V) verifies whether the match qualities (M2) of the peaks (a or b) assigned to a substance by the evaluation unit or evaluation units (A and/or B) are above defined limits (rule P13b).

11. The method according to any of claims 2, 4, 5, 7 and 9, in which, in the situation where the first evaluation device (A) has assigned to the same substance a plurality of peaks (a) that have not yet been invalidated by the activated rules already implemented before this rule, only that peak (a) with the largest area is processed further in the validation device (V) (rule P7b).

12. The method according to claim 3, 4 or 8, in which, when the second evaluation device (B) is used, the validation device (V) verifies whether the peaks for time standards defined for a sample (P) have been found by the second evaluation device (B), and have not yet been invalidated by the activated rules already implemented before this rule (rule S1).

13. The method according to any of claims 2, 4 to 7, 9 and 11, in which, when the first evaluation device (A) is used, the validation device (V) verifies whether the retention index of the standard for linear modeling (LM-RI) and the retention index (RI) of a peak (a) assigned to a substance by the first evaluation device (A) lie, within defined variances, adjacent to or on a straight line when plotted against one another (rule P16a/b (LIN_MOD)).

14. The method according to claim 13, in which the standard is a particular standard for linear modeling and/or any given substance.

15. The method according to any of claims 3 to 6, 8 and 12, in which, when the second evaluation device (B) is used, the validation device (V) verifies whether the retention index of the standard for linear modeling (LM-RI) and the retention index (RI) of a peak (b) assigned to a substance by the second evaluation device (B) lie, within defined variances, adjacent to or on a straight line when plotted against one another (rule P9a/b (LIN_MOD)).

16. The method according to claim 15, in which the standard is a particular standard for linear modeling and/or any given substance.

17. The method according to any of claims 2, 4 to 7, 9, 11, 13 and 14, in which the validation device (V) verifies the peaks (a) assigned to substances by the first evaluation device (A) as to whether they have alongside them, between defined minimum and maximum values of the retention time on a defined side, a defined adjacent peak that has not yet been invalidated by the activated rules already implemented before this rule (rule P18a/b).

18. The method according to any of claims 3, 4 to 6, 8, 9, 12, 15 and 16, in which the validation device (V) verifies the peaks (b) assigned to substances by the second evaluation device (B) as to whether they have alongside them, between defined minimum and maximum values of the retention time on a defined side, a defined adjacent peak that has not yet been invalidated by the activated rules already implemented before this rule (rule P11a/b).

19. The method according to any of claims 2, 4 to 7, 9, 11, 13, 14 and 17, in which, in the situation where the first evaluation device (A) has assigned to the same substance a plurality of peaks (a) which have not yet been invalidated by the activated rules already implemented before this rule, only the peak (a) with the largest area is processed further in the validation device (V) (rule P19b).

20. The method according to any of claims 3, 4 to 6, 8, 9, 12, 15, 16 and 18, in which, when the second evaluation device (B) is used, the validation device (V) verifies whether the peaks (b) assigned to a substance by the second evaluation device (B) have no negative areas (rule P21).

21. The method according to any of claims 2, 4 to 7, 9, 11, 13, 14, 17 and 19, in which, when the first evaluation device (A) is used, the validation device (V) verifies that any peak (a) which has not been assigned to any substance by the first evaluation device (A), i.e. an unknown peak (a), has no validated known adjacent peak within defined limits, the reference spectrum of which also has a match quality above a defined limit with the mass spectrum of the unknown peak (a) (rule P22).

22. The method according to any of claims 3, 4 to 6, 8, 9, 12, 15, 16, 18 or 20, in which, when the second evaluation device (B) is used, the validation device (V) verifies that any TIC peak (b) which has not been assigned to any substance by the second evaluation device (B) has no validated known adjacent peak within defined limits, the reference spectrum of which also has a match quality above a defined limit with the mass spectrum of the unknown TIC peak (b) (rule P23).

**23.** The method according to any of claims 3, 4 to 6, 8, 9, 12, 15, 16, 18, 20 and 22, in which, when the second evaluation device (B) is used, the validation device (V) verifies that any peak (b) which has been assigned to a substance by the second evaluation device (B) is above a defined signal-to-noise ratio and a signal intensity value for the decision limit of the substance (rule P24).

**24.** The method according to any of claims 3, 4 to 6, 8, 9, 12, 15, 16, 18, 20, 22 and 23, in which, when the second evaluation device (B) is used, the validation device (V) verifies that any peak (b) which has been assigned to a substance by the second evaluation device (B) is above a defined signal-to-noise ratio and a signal intensity value for the detection limit of the substance (rule P25).

**25.** The method according to any of claims 3, 4 to 6, 8, 9, 12, 15, 16, 18, 20 and 22 to 24, in which, when the second evaluation device (B) is used, the validation device (V) verifies that any peak (b) which has been assigned to a substance by the second evaluation device (B) is above a defined signal-to-noise ratio and a signal intensity value for the determination limit of the substance (rule P26).

**26.** The method according to any of claims 23 to 25, in which the defined signal-to-noise ratios and the signal intensity values rise in the sequence of decision limit, detection limit, determination limit, and may differ according to the substance assigned to a peak.

**27.** A mass spectrometry analysis system for analyzing a sample containing a plurality of substances, having

- a measurement device (M) for receiving mass spectra of the sample (P) obtained from an upstream chromatograph,
- a first evaluation device (A) for deconvolution of the mass spectra obtained from the measurement device (M) with at least one comparison device for comparing the deconvoluted mass spectra with stored reference spectra and/or a second evaluation device (B) for ascertaining of the intensity of the peaks of the ions of the mass spectra obtained from the measurement device (M) with specification of ions specific to the substance and their retention time range the second evaluation device (B) having at least one comparison device for comparing the mass spectra of the chromatograph peaks of the ions with stored reference spectra,

wherein

- the first evaluation device (A) is set up to execute assignment of chromatographic peaks (a) and their associated deconvoluted mass spectra to one of the substances in each case on the basis of the match with a reference spectrum for the substance
and
- the second evaluation device (B) is set up to execute assignment of chromatographic peaks (b) of the ions and their corresponding mass spectra to one of the substances in each case on the basis of the match of selective ions and their retention time ranges of the peaks (b) with the reference values fixed for a substance,

and having

- a validation device (V) for verifying the assignments made by the first and/or second evaluation device (A, B) at least using peak-oriented rules,

wherein the validation device, when the first and/or second evaluation unit (A, B) is used, is set up to execute verification

- whether the retention index (RI) of a peak (a or b) assigned to a substance by the evaluation device (A, B) is within defined limits (rules P15, P8) and
- that a peak (a or b) found by the first and/or second evaluation device (A, B) and optionally assigned to a substance has not been standardized to a standard peak (SP) that is absent or has not been successfully verified by rules implemented and activated beforehand (rule P20),

and to approve only the peaks of the evaluated or deconvoluted mass spectra signals that have each been successfully verified by activated rules for further evaluation,
and wherein the validation device is set up to verify, in parallel, whether a sample that has been fractionated prior to the analysis has peaks in fractions marked as absent or as incorrect measurements, and to exclude such peaks from further analysis (rule S2),
and to issue a warning message if no peaks are found for a fraction present (rule CP1).

**28.** The mass spectrometry analysis system according to claim 27, which has at least one programmable data processing system set up as the first and/or the second evaluation device (A or B).

**29.** A laboratory information management system (LIMS) having a mass spectrometry analysis system according to claim 27 or 28.

**30.** The use of a method according to any of claims 1 to 26, of a mass spectrometry analysis system according to claim 27 or 28, or of a laboratory information management system according to claim 29 for analyzing a sample containing a plurality of substances.

31. The use according to claim 30, in which the sample to be analyzed is a plant extract.

**Revendications**

1. Procédé pour l'analyse d'un échantillon contenant plusieurs substances, comprenant les étapes suivantes :

   - l'acquisition de spectres de masse (données de spectre de masse D) de l'échantillon (P) obtenu à partir d'un chromatographe en amont dans un dispositif de mesure (M),
   - l'association de pics chromatographiques (a) et (b) et leurs spectres de masse correspondants respectivement à une des substances, l'association ayant lieu dans un premier dispositif d'évaluation (A) et/ou un deuxième dispositif d'évaluation (B), le premier dispositif d'évaluation (A) comprenant au moins un dispositif de comparaison pour la comparaison de spectres de masse résultant de la déconvolution avec des spectres de référence stockés et le deuxième dispositif de comparaison pour la comparaison de spectres de masse des pics chromatographiques des ions avec des spectres de référence stockés,
   - l'étape d'association dans le premier dispositif d'évaluation (A) comprenant la déconvolution des spectres de masse obtenus par le dispositif de mesure (M) et l'association des pics chromatographiques (a) et leurs spectres de masse correspondants résultant de la déconvolution, respectivement à une des substances, en conséquence de la correspondance avec un spectre de référence de la substance, et
   - l'étape d'association dans le deuxième dispositif d'évaluation (B) comprenant la détermination de l'intensité des pics obtenus par le dispositif de mesure des ions des spectres de masse avec spécification des ions spécifiques pour la substance et de leur intervalle de temps de rétention, et l'association des pics chromatographiques (b) des ions et leurs spectres de masse correspondants, respectivement à une des substances, en conséquence de la correspondance d'ions sélectifs et de leurs intervalles de temps de rétention des pics (b), avec les valeurs de référence prédéterminées pour une substance, et

- la vérification des associations réalisées du premier et/ou du deuxième dispositif d'évaluation (A, B) dans un dispositif de validation (V), au moins en se fondant sur des règles relatives aux pics,

dans le dispositif de validation lors de l'utilisation du premier et/ou du deuxième dispositif d'évaluation (A, B), il étant vérifié

- si l'indice de rétention (RI) d'un pic (a ou b) associé à une substance par le dispositif d'évaluation (A, B) se situe entre des valeurs limites établies (règles P15, PB), et
- qu'un pic (a ou b) trouvé par le premier et/ou le deuxième dispositif d'évaluation (A, B) et éventuellement associé à une substance n'a pas été normé à un pic standard (SP) non présent ou non vérifié avec succès par des règles auparavant appliquées et activées (règle P20),

seuls les pics respectifs vérifiés avec succès par des règles activées des signaux de spectre de masse évalués ou résultant de la déconvolution pour l'évaluation ultérieure étant libérés, et il étant vérifié en parallèle si un échantillon qui a été fractionné avant l'analyse présente des pics dans des fractions marquées comme manquantes ou comme des fausses mesures, et de tels pics étant exclus de l'analyse ultérieure (règle S2), et un message d'avertissement étant émis lorsqu'aucun pic n'est trouvé pour une fraction présente (règle CP1) .

2. Procédé selon la revendication 1, selon lequel au moins le premier dispositif d'évaluation (A) est prévu.

3. Procédé selon la revendication 1, selon lequel au moins le deuxième dispositif d'évaluation (B) est prévu.

4. Procédé selon la revendication 1, selon lequel le premier et le deuxième dispositif d'évaluation (A, B) sont prévus.

5. Procédé selon la revendication 4, dans lequel, dans le dispositif de validation (V), les pics (a ou b) associés à la même substance par les deux dispositifs d'évaluation (A et B) sont vérifiés pour déterminer si leurs divergences au niveau du temps de rétention (RT) l'un par rapport à l'autre se situent entre des valeurs limites établies (règle P7a).

6. Procédé selon la revendication 4 ou 5, dans lequel, dans le dispositif de validation (V), lors de l'utilisation du dispositif d'évaluation (A et B), les pics (a ou b) associés à la même substance par les deux dispositifs d'évaluation (A et B) sont vérifiés pour déterminer si leurs divergences au niveau de l'indice de rétention (RI) l'un par rapport à l'autre se situent entre des valeurs limites établies (règle P19a).

7. Procédé selon l'une quelconque des revendications 2 ou 4 à 6, dans lequel, dans le dispositif de validation (V), lors de l'utilisation du premier dispositif d'évaluation (A), il est vérifié si les temps de rétention des pics (a) associés à des substances par le premier dispositif d'évaluation (A) se situent entre des valeurs limites établies (règle P4).

8. Procédé selon l'une quelconque des revendications 3 à 6, dans lequel, dans le dispositif de validation (V), lors de l'utilisation du deuxième dispositif d'évaluation (B), il est vérifié si les temps de rétention des pics (b) associés à des substances par le deuxième dispositif d'évaluation (B) se situent entre des valeurs limites établies (règle P1).

9. Procédé selon l'une quelconque des revendications 2 ou 4 à 7, dans lequel, dans le dispositif de validation (V), lors de l'utilisation du premier dispositif d'évaluation (A), il est vérifié si les qualités de correspondance (M1) des pics (a) associés à une substance par le premier dispositif d'évaluation (A) se situent au-dessus de valeurs limites établies (règle P13a).

10. Procédé selon l'une quelconque des revendications précédentes, dans lequel, dans le dispositif de validation (V), lors de l'utilisation du premier et/ou du deuxième dispositif d'évaluation (A, B), il est vérifié si les qualités de correspondance (M2) des pics (a ou b) associés à une substance par le ou les dispositifs d'évaluation (A et/ou B) se situent au-dessus de valeurs limites établies (règle P13b).

11. Procédé selon l'une quelconque des revendications 2, 4, 5, 7 ou 9, dans lequel, dans le dispositif de validation (V), lorsque le premier dispositif d'évaluation (A) a associé à la même substance plusieurs pics (a), qui n'ont pas encore été invalidés par les règles activées déjà appliquées avant cette règle, seul le pic (a) présentant la plus grande surface est soumis à un traitement ultérieur (règle P7b).

12. Procédé selon la revendication 3, 4 ou 8, dans lequel, dans le dispositif de validation (V), lors de l'utilisation du deuxième dispositif d'évaluation (B), il est vérifié si les pics établis pour un échantillon (P) pour des standards de temps ont été trouvés par le deuxième dispositif d'évaluation (B) et n'ont pas encore été invalidés par les règles activées déjà appliquées avant cette règle (règle S1).

13. Procédé selon l'une quelconque des revendications 2, 4 à 7, 9 ou 11, dans lequel, dans le dispositif de validation (V), lors de l'utilisation du premier dispositif d'évaluation (A), il est vérifié si l'indice de rétention du standard pour la modélisation linéaire (LM-RI) et l'indice de rétention (RI) d'un pic (a) associé à une substance par le premier dispositif d'évaluation (A) se situent au niveau de ou sur une droite entre des divergences établies lorsqu'ils sont tracés l'un par rapport à l'autre (règle P16a/b (LIN_MOD)).

14. Procédé selon la revendication 13, dans lequel le standard est un standard particulier pour la modélisation linéaire et/ou une substance quelconque.

15. Procédé selon l'une quelconque des revendications 3 à 6, 8 ou 12, dans lequel, dans le dispositif de validation (V), lors de l'utilisation du deuxième dispositif d'évaluation (B), il est vérifié si l'indice de rétention du standard pour la modélisation linéaire (LM-RI) et l'indice de rétention (RI) d'un pic (b) associé à une substance par le deuxième dispositif d'évaluation (B) se situent au niveau de ou sur une droite entre des divergences établies lorsqu'ils sont tracés l'un par rapport à l'autre (règle P9a/b (LIN_MOD)).

16. Procédé selon la revendication 15, dans lequel le standard est un standard particulier pour la modélisation linéaire et/ou une substance quelconque.

17. Procédé selon l'une quelconque des revendications 2, 4 à 7, 9, 11, 13 ou 14, dans lequel, dans le dispositif de validation (V), les pics (a) associés à des substances par le premier dispositif d'évaluation (A) sont vérifiés pour déterminer si ceux-ci présentent à leur côté un pic voisin établi qui n'a pas encore été invalidé par les règles activées déjà appliquées avant cette règle, entre des valeurs minimales et maximales établies du temps de rétention sur un côté établi (règle P18a/b).

18. Procédé selon l'une quelconque des revendications 3, 4 à 6, 8, 9, 12, 15 ou 16, dans lequel, dans le dispositif de validation (V), les pics (b) associés à des substances par le deuxième dispositif d'évaluation (B) sont vérifiés pour déterminer si ceux-ci présentent à leur côté un pic voisin établi qui n'a pas encore été invalidé par les règles activées déjà appliquées avant cette règle, entre des valeurs minimales et maximales établies du temps de rétention sur un côté établi (règle P11a/b).

19. Procédé selon l'une quelconque des revendications 2, 4 à 7, 9, 11, 13, 14 ou 17, dans lequel, dans le dispositif de validation (V), lorsque le premier dispositif d'évaluation (A) a associé à la même substance plusieurs pics (a), qui n'ont pas encore été invalidés par les règles activées déjà appliquées avant cette règle, seul le pic (a) présentant la plus grande surface est soumis à un traitement ultérieur (règle P19b).

20. Procédé selon l'une quelconque des revendications 3, 4 à 6, 8, 9, 12, 15, 16 ou 18, dans lequel, dans le dispositif de validation (V), lors de l'utilisation du deuxième dispositif d'évaluation (B), il est vérifié si les pics (b) associés à une substance par le deuxième dispositif d'évaluation (B) ne présentent pas de surface négative (P21).

21. Procédé selon l'une quelconque des revendications 2, 4 à 7, 9, 11, 13, 14, 17 ou 19, dans lequel, dans le dispositif de validation (V), lors de l'utilisation du premier dispositif d'évaluation (A), il est vérifié qu'un pic (a) associé à aucune substance par le premier dispositif d'évaluation (A), c'est-à-dire inconnu, ne présente pas de pic voisin connu validé entre des valeurs limites établies, dont le spectre de référence présente également une qualité de correspondance située au-dessus d'une limite établie avec le spectre de masse du pic (a) inconnu (règle P22).

22. Procédé selon l'une quelconque des revendications 3, 4 à 6, 8, 9, 12, 15, 16, 18 ou 20, dans lequel, dans le dispositif de validation (V), lors de l'utilisation du deuxième dispositif d'évaluation (B), il est vérifié qu'un pic TIC (b) associé à aucune substance par le deuxième dispositif d'évaluation (B) ne présente pas de pics voisin connu validé entre des valeurs limites établies, dont le spectre de référence présente également une qualité de correspondance située au-dessus d'une limite établie avec le spectre de masse du pic TIC (b) inconnu (règle P23).

23. Procédé selon l'une quelconque des revendications 3, 4 à 6, 8, 9, 12, 15, 16, 18, 20 ou 22, dans lequel, dans le dispositif de validation (V), lors de l'utilisation du deuxième dispositif d'évaluation (B), il est vérifié qu'un pic (b) associé à une substance par le deuxième dispositif d'évaluation (B) se situe au-dessus d'un rapport signal/bruit établi et d'une valeur d'intensité de signal pour la limite de détection de la substance (règle P24).

24. Procédé selon l'une quelconque des revendications 3, 4 à 6, 8, 9, 12, 15, 16, 18, 20, 22 ou 23, dans lequel, dans le dispositif de validation (V), lors de l'utilisation du deuxième dispositif d'évaluation (B), il est vérifié qu'un pic (b) associé à une substance par le deuxième dispositif d'évaluation (B) se situe au-dessus d'un rapport signal/bruit établi et d'une valeur d'intensité de signal pour la limite d'inclusion de la substance (règle P25).

25. Procédé selon l'une quelconque des revendications 3, 4 à 6, 8, 9, 12, 15, 16, 18, 20 ou 22 à 24, dans lequel, dans le dispositif de validation (V), lors de l'utilisation du deuxième dispositif d'évaluation (B), il est vérifié qu'un pic (b) associé à une substance par le deuxième dispositif d'évaluation (B) se situe au-dessus d'un rapport signal/bruit établi et d'une valeur d'intensité de signal pour la limite de quantification de la substance (règle P26).

26. Procédé selon l'une quelconque des revendications 23 à 25, dans lequel les rapports signal/bruit établis et les valeurs d'intensité de signal augmentent dans la série : limite de détection, limite d'inclusion, limite de quantification, et peuvent être différents en fonction de la substance associée à un pic.

27. Système d'analyse de spectres de masse pour l'analyse d'un échantillon contenant plusieurs substances, comprenant :

- un dispositif de mesure (M) pour l'acquisition de spectres de masse de l'échantillon (P) obtenu à partir d'un chromatographe en amont,
- un premier dispositif d'évaluation (A) pour la déconvolution des spectres de masse obtenus par le dispositif de mesure (M), comprenant au moins un dispositif de comparaison pour la comparaison des spectres de masse résultant de la déconvolution avec des spectres de référence stockés, et/ou un deuxième dispositif d'évaluation (B) pour la détermination de l'intensité des pics obtenus par le dispositif de mesure (M) des ions des spectres de masse, avec spécification des ions spécifiques pour la substance et de leur intervalle de temps de rétention, le deuxième dispositif d'évaluation (B) comprenant au moins un dispositif de comparaison pour la comparaison des spectres de masse des pics chromatographiques des ions avec des spectres de référence stockés,
- le premier dispositif d'évaluation (A) étant adapté pour réaliser une association de pics chromatographiques (a) et leurs spectres de masse correspondants résultant de la déconvolution respectivement à une des substances, en conséquence de la correspondance avec un spectre de référence de la substance, et
- le deuxième dispositif d'évaluation (B) étant adapté pour réaliser une association de pics chromatographiques (b) des ions et leurs spectres de masse correspondants respectivement à une des substances, en conséquence de la correspondance d'ions sélectifs et leurs intervalles de temps de rétention des pics (b) avec les valeurs de référence prédéterminées pour une substance,

et comprenant

- un dispositif de validation (V) pour la vérification des associations réalisées du premier et/ou du deuxième dispositif d'évaluation (A, B) au moins en se fondant sur des règles relatives aux pics, le dispositif de validation étant adapté, lors de l'utilisation du premier et/ou du deuxième dispositif d'évaluation (A, B), pour réaliser une vérification

- de si l'indice de rétention (RI) d'un pic (a ou b) associé à une substance par le dispositif d'évaluation (A, B) se situe entre des valeurs limites établies (règles P15, P8), et

- qu'un pic (a ou b) trouvé par le premier et/ou le deuxième dispositif d'évaluation (A, B) et éventuellement associé à une substance n'a pas été normé à un pic standard (SP) non présent ou non vérifié avec succès par des règles auparavant appliquées et activées (règle P20),

et libérer seuls les pics respectifs vérifiés avec succès par des règles activées des signaux de spectre de masse évalués ou résultant de la déconvolution pour l'évaluation ultérieure,
et le dispositif de validation étant adapté pour réaliser en parallèle une vérification de si un échantillon qui a été fractionné avant l'analyse présente des pics dans des fractions marquées comme manquantes ou comme des fausses mesures, et exclure de tels pics de l'analyse ultérieure (règle S2),
et émettre un message d'avertissement lorsqu'aucun pic n'est trouvé pour une fraction présente (règle CP1).

**28.** Système d'analyse de spectres de masse selon la revendication 27, qui comprend en tant que premier et/ou deuxième dispositif d'évaluation (A ou B) au moins une unité de traitement de données configurée par un programme.

**29.** Système de gestion de l'information du laboratoire (LIMS) comprenant un système d'analyse de spectres de masse selon la revendication 27 ou 28.

**30.** Utilisation d'un procédé selon l'une quelconque des revendications 1 à 26, d'un système d'analyse de spectres de masse selon la revendication 27 ou 28, ou d'un système de gestion de l'information du laboratoire selon la revendication 29 pour l'analyse d'un échantillon contenant plusieurs substances.

**31.** Utilisation selon la revendication 30, dans laquelle l'échantillon à analyser est un extrait de plante.

Fig. 1

Fig. 2

## Fig. 3

## Fig. 4

## Fig. 5

## Fig. 6

## Fig. 7

## Fig. 8

## Fig. 9

## Fig. 10

## Fig. 11

## Fig. 12

## Fig. 13

## Fig. 14

Fig. 15

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6147344 A
- US 5175430 A
- US 5453613 A

**In der Beschreibung aufgeführte Nicht-Patentliteratur**

- **J. BILLER ; K. BIEMANN.** *Anal Letters,* 1974, vol. 7, 515
- **R. G. DROMEY et al.** *Anal. Chem.,* 1976, vol. 48, 1365
- **B. N. COLBY.** *J. Am. Soc. Mass Spectrom.,* 1992, vol. 3, 3558-3562
- AMDIS (Automated Mass Spectral Deconvolution & Identification System. National Institute of Standards and Technology (NIST)
- **S. E. STEIN.** *J. Am. Soc. Mass. Spektrom.,* 1999, vol. 10, 770-781, http://chemdata.nist.gov/mass-spc/am-dis/method.pdf
- Römpp Lexikon Chemie - CD Version 2.0. Georg Thieme Verlag, 1999
- **H.-J. STAN.** *J. Chromatogr. A,* 2000, vol. 892, 347-377